# EUROPEAN PATENT APPLICATION

(11) **EP 4 715 945 A1**
(43) Date of publication of application: **25.03.2026**
(21) Application number: 23937470.5
(22) Date of filing: 16.05.2023
(51) Int. Cl.: H01M 10/0587, H01M 4/133, H01M 4/66, H01M 50/533, H01M 50/534

(54) **ELECTRODE SHEET AND SECONDARY BATTERY**

(71) Applicant: TERAWATT TECHNOLOGY K.K., Yokohama-shi, Kanagawa 226-0026 (JP)
(72) Inventor: OYAMA, Gosuke, Yokohama-shi, Kanagawa 226-0026 (JP); MIYAKE, Minoru, Yokohama-shi, Kanagawa 226-0026 (JP); TAKIMOTO, Kazuki, Yokohama-shi, Kanagawa 226-0026 (JP); SAKASHITA, Naoki, Yokohama-shi, Kanagawa 226-0026 (JP); OGATA, Ken, Yokohama-shi, Kanagawa 226-0026 (JP)
(74) Representative: FRKelly
(86) International application number: PCT/JP2023/018250
(87) International publication number: WO 2024/236728

(57) **Abstract**

There is provided a technique for improving the usefulness of a lithium secondary battery.

An electrode sheet 1 has a longitudinal direction and a lateral direction and constitutes an electrode of a secondary battery 2 by being wound with the lateral direction as an axial direction. The electrode sheet 1 includes a current collector 3 that includes a resin layer 10, and a first current collecting layer 12a and a second current collecting layer 12b that are respectively provided on both surfaces of the resin layer 10; a first active material layer 16a that is provided on a surface of the first current collecting layer 12a on a side opposite to the resin layer 10; and a first metal sheet 20a that is bonded to one end of the first current collecting layer 12a in the lateral direction and has a first bonding mark 24a formed along the longitudinal direction by the bonding, where the first metal sheet 20a has a first extending part 40a that extends from the first current collecting layer 12a in the lateral direction.

## Description

### Technical Field

The exemplary embodiment according to the present disclosure relates to an electrode sheet and a secondary battery.

### Background Art

In recent years, the technique of converting natural energy such as sunlight and wind power into electric energy has attracted attention. Under such a situation, various secondary batteries have been developed as a power storage device which is highly safe and can store a lot of electric energy.

Among the above, a lithium secondary battery which carries out charging/discharging by transferring lithium ions between a positive electrode and a negative electrode is known to exhibit a high voltage and a high energy density. As a typical lithium secondary battery, a lithium ion secondary battery (LIB), which has an active material for allowing a positive electrode and a negative electrode to hold a lithium element, is known. In a lithium ion secondary battery, charging/discharging is carried out by the transfer of lithium ions between a positive-electrode active material and a negative-electrode active material.

In addition, a current collector that is intended to increase the safety of a lithium ion secondary battery has been developed. For example, Patent Literature 1 discloses a lithium ion secondary battery that is intended to provide a positive and negative electrode configuration that prevents ignition during abnormal heat generation that occurs during overcharging or at a high temperature while maintaining the electric resistance at the same level as in the related art.

In addition, for the purpose of suppressing heat generation, a secondary battery having a small ohmic resistance has been developed. For example, Patent Literature 2 discloses a cell of an energy storage device that provides more uniform electrical contact between an electrode current collector and an inner surface of a can.

### Citation List

### Patent Literatures

Patent Literature 1: Japanese Patent Application Laid-Open No. H11-102711
Patent Literature 2: PCT Japanese Translation Patent Publication No. 2022-512776

### Summary of Invention

### Technical Problem

The present disclosure provides a technique for improving the usefulness of a secondary battery.

### Solution to Problem

In one exemplary embodiment of the present disclosure, there is provided a secondary battery that has a longitudinal direction and a lateral direction and constitutes an electrode of a secondary battery by being wound with the lateral direction as an axial direction, where the electrode sheet includes: a current collector that includes a resin layer, and a first current collecting layer and a second current collecting layer that are respectively provided on both surfaces of the resin layer; a first active material layer that is provided on a surface of the first current collecting layer on a side opposite to the resin layer; and a first metal sheet that is bonded to one end of the first current collecting layer in the lateral direction and has a first bonding mark formed along the longitudinal direction by the bonding, where the first metal sheet has a first extending part that extends from the first current collecting layer in the lateral direction.

In another exemplary embodiment of the present disclosure, there is provided a secondary battery constituted by winding a laminated sheet obtained by sandwiching a separator between a positive electrode sheet and a negative electrode sheet, each of which has a longitudinal direction and a lateral direction with the lateral direction as an axial direction, in which the positive electrode sheet includes a positive electrode-side current collector that includes a positive electrode-side resin layer, and a first current collecting layer and a second current collecting layer that are respectively provided on both surfaces of the positive electrode-side resin layer, a positive electrode active material layer that is provided on a surface of the first current collecting layer on a side opposite to the positive electrode-side resin layer, and a first metal sheet that is bonded to one end of the first current collecting layer in the lateral direction and has a first bonding mark formed along the longitudinal direction by the bonding, where the first metal sheet has a first extending part that extends from the first current collecting layer in the lateral direction; a negative electrode sheet includes a negative electrode-side current collector that includes a negative electrode-side resin layer, and a third current collecting layer and a fourth current collecting layer that are respectively provided on both surfaces of the negative electrode-side resin layer, a negative electrode active material layer that is provided on a surface of the third current collecting layer on a side opposite to the negative electrode-side resin layer, and a third metal sheet that is bonded to the other end of the third current collecting layer in the lateral direction and has a third bonding mark formed along the longitudinal direction by the bonding, where the third metal sheet has a third extending part that extends from the third current collecting layer in the lateral direction; and the separator is in contact with the positive electrode active material layer and the negative electrode active material layer.

### Advantageous Effect of Invention

According to one exemplary embodiment of the present disclosure, it is possible to provide a technique for improving the usefulness of a secondary battery.

### Brief Description of Drawings

[Figure 1] Figure 1 is a view for describing a configuration example of an electrode sheet according to a first embodiment.
[Figure 2] Figure 2 is a view for describing a configuration example of the electrode sheet according to the first embodiment.
[Figure 3] Figure 3 is a view for describing a configuration example of the electrode sheet according to the first embodiment.
[Figure 4] Figure 4 is a view for describing a configuration example of the electrode sheet according to the first embodiment.
[Figure 5] Figure 5 is a view for describing a configuration example of the electrode sheet according to the first embodiment.
[Figure 6] Figure 6 is a view for describing a configuration example of an electrode sheet according to a second embodiment.
[Figure 7] Figure 7 is a view for describing a configuration example of the electrode sheet according to the second embodiment.
[Figure 8] Figure 8 is a view for describing a configuration example of the electrode sheet according to the second embodiment.
[Figure 9] Figure 9 is a view for describing a configuration example of a secondary battery.
[Figure 10] Figure 10 is a view for describing a configuration example of a secondary battery.
[Figure 11] Figure 11 is a view for describing a configuration example of a secondary battery.
[Figure 12] Figure 12 is a view for describing a modification example of an electrode sheet.
[Figure 13] Figure 13 is a view for describing a modification example of the electrode sheet.
[Figure 14] Figure 14 is a view for describing a modification example of the electrode sheet.
[Figure 15] Figure 15 is a view for describing a modification example of the electrode sheet.
[Figure 16] Figure 16 is a view for describing a modification example of the electrode sheet.
[Figure 17] Figure 17 is a view for describing a modification example of the electrode sheet.
[Figure 18] Figure 18 is a view for describing a modification example of the electrode sheet.
[Figure 19] Figure 19 is a view for describing a modification example of the electrode sheet.

### Description of Embodiments

Hereinafter, each embodiment according to the present disclosure will be described.

In one exemplary embodiment, an electrode sheet that has a longitudinal direction and a lateral direction and constitutes an electrode of a secondary battery by being wound with the lateral direction as an axial direction, where the electrode sheet includes: a current collector that includes a resin layer, and a first current collecting layer and a second current collecting layer that are respectively provided on both surfaces of the resin layer; a first active material layer that is provided on a surface of the first current collecting layer on a side opposite to the resin layer; and a first metal sheet that is bonded to one end of the first current collecting layer in the lateral direction and has a first bonding mark formed along the longitudinal direction by the bonding, where the first metal sheet has a first extending part that extends from the first current collecting layer in the lateral direction, is provided.

In one exemplary embodiment, the first extending part includes one or more slits.

In one exemplary embodiment, the one or more slits are provided along the lateral direction.

In one exemplary embodiment, the first extending part includes a plurality of recessed parts that are recessed in the lateral direction, along the longitudinal direction.

In one exemplary embodiment, the plurality of recessed parts are provided to be spaced apart from each other at regular intervals.

In one exemplary embodiment, the recessed part has a rectangular shape.

In one exemplary embodiment, the first bonding mark is a welding mark.

In one exemplary embodiment, the first bonding mark is formed from the first metal sheet to the first current collecting layer.

In one exemplary embodiment, the first bonding mark is formed to have a linear shape or a shape of a plurality of dots along the longitudinal direction.

In one exemplary embodiment, the first bonding mark is formed from the first metal sheet to the second current collecting layer.

In one exemplary embodiment, the current collector has a shape that is recessed in a direction from the second current collecting layer toward the first current collecting layer in a cross section including the first bonding mark.

In one exemplary embodiment, the current collector has a region in which the first current collecting layer and the second current collecting layer are integrated in a cross section including the first bonding mark.

In one exemplary embodiment, the following is further provided: a second active material layer that is provided on a surface of the second current collecting layer on a side opposite to the resin layer; and a second metal sheet that is bonded to one end of the second current collecting layer in the lateral direction and has a second bonding mark formed along the longitudinal direction by the bonding, where the second metal sheet has a second extending part that extends from the second current collecting layer in the lateral direction.

In one exemplary embodiment, the second bonding mark is a welding mark, and has a recessed shape in a direction from the first current collecting layer toward the second current collecting layer in a cross section including the second bonding mark.

In one exemplary embodiment, the first extending part and the second extending part are bonded to each other.

In one exemplary embodiment, the first metal sheet is bonded to the one end such that an interval of 0.1 mm to 10 mm is provided between the first metal sheet and the first active material layer.

In one exemplary embodiment, the first active material layer is a positive-electrode active material, and the first metal sheet is a metal including aluminum.

In one exemplary embodiment, the first active material layer is a negative-electrode active material, and the first metal sheet is a metal including copper.

Hereinafter, each embodiment of the present disclosure will be described in detail with reference to the drawings. It is noted that in each drawing, the same or similar elements will be given the same reference numerals, and repeated descriptions will be omitted. Unless otherwise specified, a positional relationship such as up, down, left, and right will be described based on the positional relationship illustrated in the drawings. The dimensional ratio in the drawings does not indicate an actual ratio, and the actual ratio is not limited to the ratio illustrated in the drawings.

In the present disclosure, the usefulness of a secondary battery 2 includes at least a part of the energy density, safety, the monetary cost required for manufacturing, the efficiency of manufacturing, and the like of the secondary battery 2.

In addition, in the present disclosure, the secondary battery 2 will typically be described as a lithium ion secondary battery; however, it can also be applied to other kinds of secondary batteries.

### <Configuration example of electrode sheet 1 according to first embodiment>

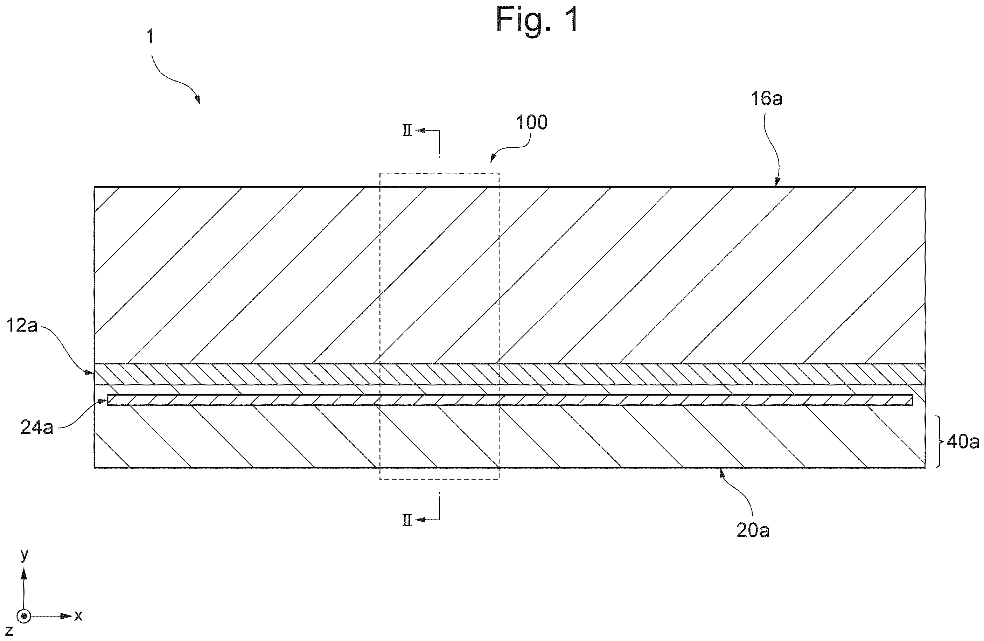

Figure 1 to Figure 5 are views for describing a configuration example of an electrode sheet 1 according to a first embodiment.

Figure 1 is a bird's-eye view for describing a configuration example of the electrode sheet 1. The electrode sheet 1 has a longitudinal direction and a lateral direction. The longitudinal direction is a direction parallel to the x axis in Figure 1. The lateral direction is a direction parallel to the y axis in Figure 1. The secondary battery 2 is constituted by winding the electrode sheet 1 with the lateral direction as an axial direction.

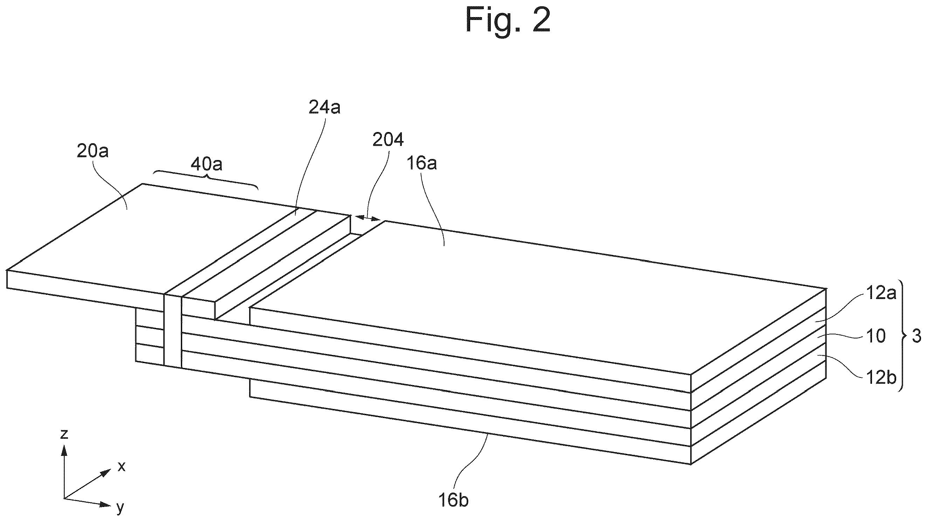

Figure 2 is a cross-sectional perspective view obtained by cutting out a portion of a region 100 in Figure 1. As shown in Figure 2, the electrode sheet 1 includes a current collector 3, a first active material layer 16a and a second active material layer 16b, and a first metal sheet 20a.

### [Current collector 3]

The current collector 3 is composed of a resin layer 10, a first current collecting layer 12a, and a second current collecting layer 12b. The first current collecting layer 12a is provided on a surface of the resin layer 10 in a positive direction of the z axis. The second current collecting layer 12b is provided on a surface of the resin layer 10 in a negative direction of the z axis.

The resin layer 10 may be composed of, for example, a sheet-shaped (film-shaped) or fibrous resin. The resin may be, for example, at least one of thermoplastic resins such as polyethylene terephthalate (PET). The resin layer 10 may be constitued by laminating a plurality of layers of at least one of the resins. In one embodiment, the resin layer 10 is formed from a material having a melting point of 130°C or higher and 300°C or lower. In one embodiment, the average thickness of the resin layer 10 may be 2 µm or more and 15 µm or less, or 3 µm or more and 10 µm or less.

In a case where the current collector 3 is configured to include the resin layer 10, the safety of the electrode sheet 1 is increased. The resin layer 10 is made of a material that melts in a case where the secondary battery 2 generates abnormal heat due to overcharging or the like. In a case where the resin layer 10 is melted, the electrode sheet 1 is damaged, and thus the current inside the battery is cut off. As a result, ignition or the like of the battery can be suppressed.

The first current collecting layer 12a and the second current collecting layer 12b are layers for extracting electric power from the first active material layer 16a and the second active material layer 16b, respectively. The materials of the first current collecting layer 12a and the second current collecting layer 12b are, for example, metals including aluminum. In one embodiment, the first current collecting layer 12a and the second current collecting layer 12b are formed to sandwich the resin layer 10 in the current collector 3. Therefore, the first current collecting layer 12a and the second current collecting layer 12b are not electrically conductive in a portion other than a region 202 of a first bonding mark 24a described later.

In one embodiment, the first current collecting layer 12a and the second current collecting layer 12b are composed of a conductor that does not react with lithium ions. In one embodiment, the first current collecting layer 12a and the second current collecting layer 12b are composed of at least one kind of material selected from the group consisting of aluminum, titanium, stainless steel, nickel, and alloys thereof. In one example, the first current collecting layer 12a and the second current collecting layer 12b are aluminum or an aluminum alloy. In one embodiment, the first current collecting layer 12a and the second current collecting layer 12b are formed by subjecting the above-described material to vapor deposition, sputtering, electrolytic plating, or bonding to the surface of the resin layer 10. In one embodiment, the average thicknesses of the first current collecting layer 12a and the second current collecting layer 12b may be 1.0 µm or more and 15 µm or less, 2.0 µm or more and 10 µm or less, or 3.0 µm or more and 6.0 µm or less.

### [First active material layer 16a and second active material layer 16b]

The first active material layer 16a is a layer provided on a surface of the first current collecting layer 12a on a side opposite to the resin layer 10 (that is, in Figure 2, a surface on a positive direction side of the z axis with respect to the first current collecting layer 12a). In addition, the second active material layer 16b is a layer provided on a surface of the second current collecting layer 12b on a side opposite to the resin layer 10 (that is, in Figure 2, a surface on a negative direction side of the z axis with respect to the second current collecting layer 12b). The first active material layer 16a and the second active material layer 16b are composed of an active material.

In one embodiment, the first active material layer 16a and the second active material layer 16b are composed of the same kind of active material. For example, in a case where the first active material layer 16a is composed of a positive-electrode active material, the second active material layer 16b is also composed of a positive-electrode active material. In addition, for example, in a case where the first active material layer 16a is composed of a negative-electrode active material, the second active material layer 16b is also composed of a negative-electrode active material.

The positive-electrode active material is a substance for holding a carrier metal in the electrode sheet 1, and it can also be referred to as a host material of the carrier metal. The positive-electrode active material may be a substance for holding lithium ions in the electrode sheet 1, and in this case, by the charging/discharging of the battery, the positive-electrode active material is filled with lithium ions and lithium ions are desorbed from the positive-electrode active material. As a result, the stability and the output voltage of the battery can be improved. In one embodiment, the positive-electrode active material is a metal oxide or a metal phosphate. The metal oxide may be, for example, a cobalt oxide-based compound, a manganese oxide-based compound, or a nickel oxide-based compound. The metal phosphate may be, for example, an iron phosphate-based compound or a cobalt phosphate-based compound. In one embodiment, the positive-electrode active material may be at least one selected from the group consisting of LiCoO2, LiNixCoyMnzO (x + y + z = 1), LiNixCoyAlzO (x + y + z = 1), LiNixMnyO (x + y = 1), LiNiO₂, LiMn₂O₄, LiFePO, LiCoPO, LiFeOF, LiNiOF, and LiTiS₂. The positive-electrode active material may be used alone or in a combination of two or more kinds thereof. In one embodiment, the content of the positive-electrode active material in the first active material layer 16a and the second active material layer 16b may be 50% by mass to 100% by mass or less with respect to the entirety of the first active material layer 16a and the second active material layer 16b.

The negative-electrode active material is a substance that causes an electrode reaction, that is, an oxidation reaction and a reduction reaction in the negative electrode. The negative-electrode active material may be, for example, lithium metal, an alloy containing lithium metal, a carbon-based substance, and a metal oxide, as well as a metal that is alloyed with lithium and an alloy containing the metal. The carbon-based substance may be, for example, graphene, graphite, hard carbon, and a carbon nanotube. The metal oxide may be, for example, a titanium oxide-based compound or a cobalt oxide-based compound. The metal to be alloyed with the above-described lithium may be, for example, silicon, germanium, tin, lead, aluminum, or gallium.

From the viewpoint of improving the energy density of the secondary battery 2, the electrode sheet 1 may be composed of both the first active material layer 16a and the second active material layer 16b as described above. However, in one embodiment, the electrode sheet 1 may not include one of the first active material layer 16a and the second active material layer 16b.

### [First metal sheet 20a]

The first metal sheet 20a is a member for electrically connecting the first current collecting layer 12a and the second current collecting layer 12b to an external electrode tab. The first metal sheet 20a is bonded to one end of the first current collecting layer 12a in the lateral direction (in Figure 2, the end in the negative direction of the y axis). The first bonding mark 24a is formed at a site where the first metal sheet 20a is bonded to the first current collecting layer 12a. The material of the first metal sheet 20a is, for example, a metal including aluminum or copper. The thickness of the first metal sheet 20a may be, for example, 3 µm to 20 µm.

In one embodiment, the first metal sheet 20a is bonded to the first current collecting layer 12a such that a predetermined interval 204 is provided between the first metal sheet 20a and the first active material layer 16a. By providing the predetermined interval 204, the risk of short-circuit in a case where the positive electrode sheet 1 and the negative electrode sheet 1 are laminated is suppressed. In one embodiment, the predetermined interval 204 may be 0.1 mm to 10 mm or may be 1 mm to 5 mm.

The first metal sheet 20a is bonded to the first current collecting layer 12a by a method in which the electrical conduction between the first metal sheet 20a and the first current collecting layer 12a is not hindered. The first metal sheet 20a may be bonded to the first current collecting layer 12a by a method of forming an atomic-level bond (for example, a metallic bond) between the first metal sheet 20a and the first current collecting layer 12a. According to such bonding, the thermal conductivity between the first metal sheet 20a and the first current collecting layer 12a is increased.

The first metal sheet 20a may be bonded to the first current collecting layer 12a by any bonding of metallurgical bonding, mechanical bonding, or chemical bonding. The metallurgical bonding includes welding, pressure bonding, and brazing. The welding includes, for example, arc welding, electron beam welding, gas welding, laser welding, and the like. The pressure bonding includes, for example, ultrasonic bonding, frictional pressure bonding, diffusion bonding, and the like. The brazing includes, for example, soldering and the like. The mechanical bonding includes, for example, riveting, caulking, bolt bonding, shrink fitting, folding, and the like. The chemical bonding includes, for example, adhesion with an adhesive, and the like.

In one embodiment, the first metal sheet 20a is bonded to the first current collecting layer 12a by ultrasonic bonding. Ultrasonic bonding is a bonding method in which pressure and vibration are applied between two metals to cause atomic-level bonding between the two metals. The bonding mark formed by ultrasonic bonding can also be said to be a welding mark, since the metal may melt during the process.

Ultrasonic bonding allows the first metal sheet 20a to be bonded to the first current collecting layer 12a in a short time. In addition, the ultrasonic bonding allows the first metal sheet 20a to be bonded to the first current collecting layer 12a without applying heat. In addition, in the ultrasonic bonding, no other material is consumed for bonding. As described above, the ultrasonic bonding makes it possible to improve the manufacturing efficiency of the electrode sheet 1. In one embodiment, the ultrasonic bonding may be rotary ultrasonic bonding that makes it possible to carry out continuous processing.

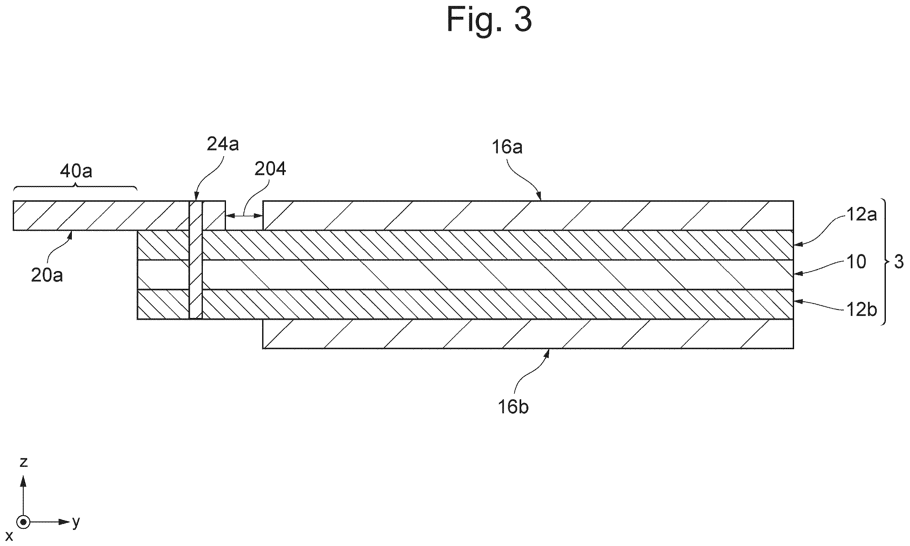

The first metal sheet 20a has a first extending part 40a and the first bonding mark 24a. Figure 3 to Figure 5 are views for a more detailed description of the first metal sheet 20a.

### [First extending part 40a]

Figure 3 is a cross-sectional view of a cross section taken along a line II-II in Figure 1. In one embodiment, the first extending part 40a is at least a part of a portion of the first metal sheet 20a, which does not overlap with the current collector 3. The first extending part 40a discharges the heat received by the first metal sheet 20a from the current collector 3 to the outside. The length of the first extending part 40a in the lateral direction may be 0.5 mm to 20 mm or may be 2 mm to 15 mm. The length of the first extending part 40a in the lateral direction may be 10% to 90% or may be 30% to 80% of the total length of the first metal sheet 20a in the lateral direction. The secondary battery 2 constituted by winding the electrode sheet 1 with the lateral direction as the axial direction has the first extending part 40a at an end part in the axial direction (lateral direction). In this case, the first extending part 40a can function as a heat radiator that discharges the heat received by the first metal sheet 20a from the current collector 3 to the outside. The first metal sheet 20a has higher thermal conductivity than the current collector 3 including the resin layer 10, and thus heat inside the secondary battery 2 can be efficiently discharged to the outside through the first extending part 40a. That is, by including the first extending part 40a, the heat dissipation properties of the secondary battery 2 can be improved.

### [First bonding mark 24a]

The first bonding mark 24a is provided at a position where the first metal sheet 20a and the current collector 3 overlap with each other. In addition, the first bonding mark 24a is provided in a linear shape along the longitudinal direction of the first metal sheet 20a (see Figure 1 and Figure 2). In addition, as shown in Figure 3, the first bonding mark 24a is formed from the first metal sheet 20a to the first current collecting layer 12a and the second current collecting layer 12b.

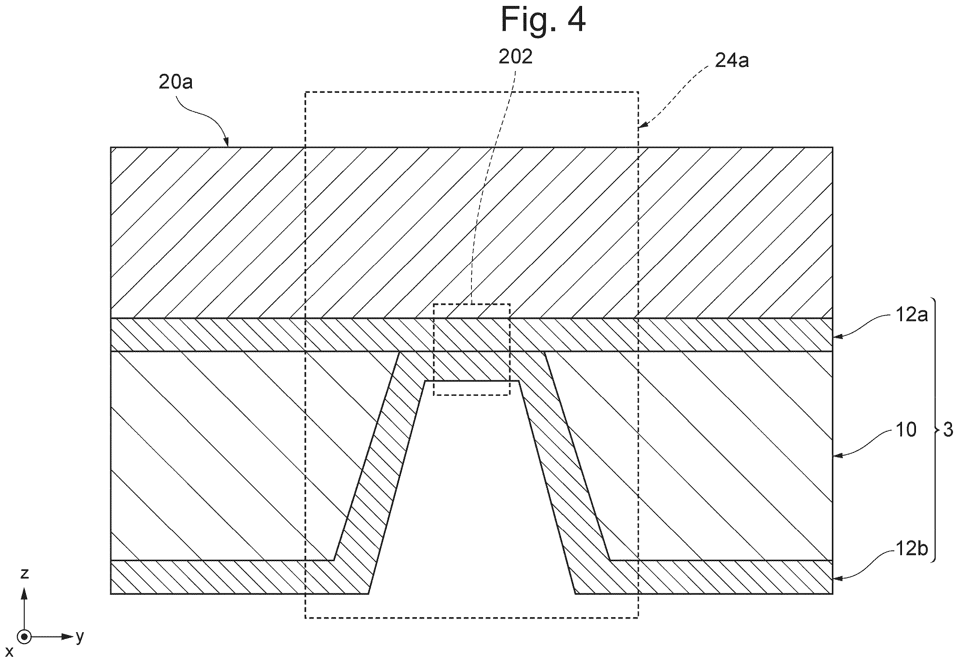

Figure 4 is an enlarged view of the periphery of the first bonding mark 24a. As shown in Figure 4, the current collector 3 has a recessed shape in a direction from the second current collecting layer 12b toward the first current collecting layer 12a in a cross section including the first bonding mark 24a. The first bonding mark 24a is formed by applying a pressure from a surface of the second current collecting layer 12b on which the first metal sheet 20a is not provided toward a surface of the first current collecting layer 12a on which the first metal sheet 20a is provided. In one embodiment, the first bonding mark 24a is formed by pressing a horn for ultrasonic bonding from the surface of the second current collecting layer 12b toward the surface of the first current collecting layer 12a. In this case, the first current collecting layer 12a on a side opposite to the second current collecting layer 12b may be deformed due to reasons in terms of manufacturing (for example, pressure applied by an anvil corresponding to a horn).

By applying, in this way, a pressure from a surface on which the first metal sheet 20a is not provided, thereby bonding the first metal sheet 20a to the first current collecting layer 12a, it is possible to suppress a decrease in the yield during the manufacturing of the electrode sheet 1. If the horn is pressed from above the first metal sheet 20a, the adhesive force between the horn and the first metal sheet 20a may exceed the adhesive force between the first metal sheet 20a and the first current collecting layer 12a. In such a case, the possibility of the peeling of the bonding between the first metal sheet 20a and the first current collecting layer 12a increases in a case where the horn for ultrasonic bonding is detached from the first metal sheet 20a. This is considered to be because a large amount of heat is generated between the horn and the first metal sheet 20a in a case where ultrasonic bonding is carried out. On the other hand, in a case where the horn is pressed from above the second current collecting layer 12b, the heat generation is relatively suppressed, and thus the peeling of the bonding in a case where the horn is detached can be suppressed.

The current collector 3 has, in a cross section including the first bonding mark 24a, the region 202 in which the first current collecting layer 12a and the second current collecting layer 12b are integrated. In one embodiment, in the region 202, the first metal sheet 20a, the first current collecting layer 12a, and the second current collecting layer 12b are melted by ultrasonic bonding. As a result, the first metal sheet 20a can be electrically connected to the first current collecting layer 12a and the second current collecting layer 12b that are provided on both surfaces of the resin layer 10 through the region 202. Therefore, in order to extract electric power from the first current collecting layer 12a and the second current collecting layer 12b, it is sufficient to connect the first metal sheet 20a to an external electrode tab.

Since the first bonding mark 24a is provided along the longitudinal direction of the first metal sheet 20a, an increase in the electric resistance of the electrode sheet 1 and the heat generation due to the increase in the electric resistance are suppressed. If the first bonding mark 24a is provided only in a part of the first metal sheet 20a in the longitudinal direction (for example, at one end in the longitudinal direction), the average movement distance of electrons between the second current collecting layer 12b and the first metal sheet 20a is increased as compared with a case where the first bonding mark 24a is provided over the entire first metal sheet 20a in the longitudinal direction. As a result, the electric resistance between the second current collecting layer 12b and the first metal sheet 20a increases, and further, the amount of heat generated increases. That is, by bonding the first metal sheet 20a to the first current collecting layer 12a along the longitudinal direction, the average movement distance of electrons is suppressed, and the electric resistance and the heat generation are also suppressed.

In addition, since the first bonding mark 24a is provided along the longitudinal direction of the first metal sheet 20a, the availability of the electrode sheet 1 is increased. If the first bonding mark 24a is provided only in a part of the first metal sheet 20a in the longitudinal direction (for example, at one end in the longitudinal direction), electric power cannot be extracted from at least the second current collecting layer 12b in a case where the bonding site is damaged. On the other hand, in a case where the first metal sheet 20a is bonded to the first current collecting layer 12a along the longitudinal direction, the first metal sheet 20a and the second current collecting layer 12b are electrically connected at the remaining bonding site even in a case where a part of the bonding site is damaged, and thus electric power can be continuously extracted from the second current collecting layer 12b.

In addition, since the first bonding mark 24a is provided along the longitudinal direction of the first metal sheet 20a, the damage to the electrode sheet 1 is suppressed. If the first bonding mark 24a is provided only in a part of the first metal sheet 20a in the longitudinal direction (for example, at one end in the longitudinal direction), a current is concentrated at the bonding site, and the possibility of damage of the bonding site due to overheating or the like increases. On the other hand, in a case where the first metal sheet 20a is bonded to the first current collecting layer 12a along the longitudinal direction, the current is dispersed over the entire bonding site, and the possibility of occurrence of overheating or the like decreases.

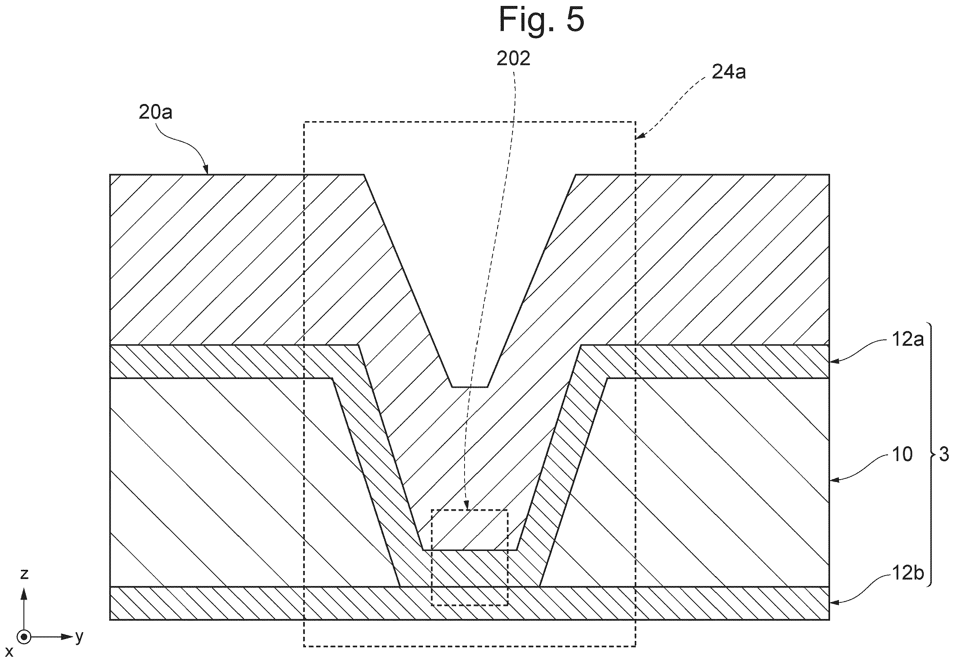

It is noted that in Figure 4, although a case where the current collector 3 has a recessed shape in a direction from the second current collecting layer 12b toward the first current collecting layer 12a in a cross section including the first bonding mark 24a has been described; however, the present invention is not limited thereto. Specifically, as shown in Figure 5, the current collector 3 may have a recessed shape in a direction from the first current collecting layer 12a toward the second current collecting layer 12b in a cross section including the first bonding mark 24a. That is, the first bonding mark 24a may be formed by pressing a horn for ultrasonic bonding from above the metal sheet 20a.

### <Configuration example of electrode sheet 1 according to second embodiment>

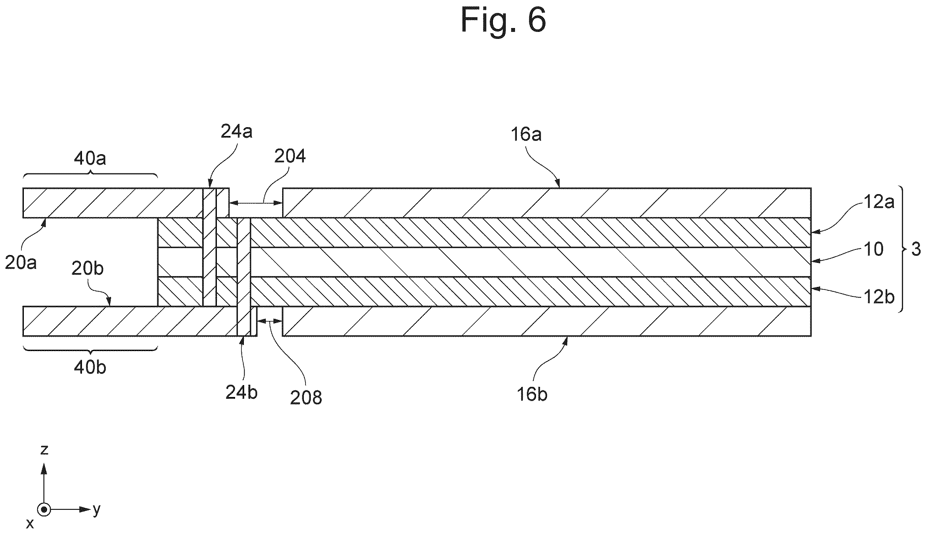

Figure 6 to Figure 8 are views for describing a configuration example of an electrode sheet 1 according to a second embodiment.

Figure 6 is a cross-sectional view of the electrode sheet 1 including not only the first metal sheet 20a but also the second metal sheet 20b. Similar to the first metal sheet 20a, the second metal sheet 20b is a member for electrically connecting the first current collecting layer 12a and the second current collecting layer 12b to an external electrode tab. The second metal sheet 20b is bonded to one end of the second current collecting layer 12b in the lateral direction (in Figure 6, the end in the negative direction of the y axis). The material of the second metal sheet 20b is, for example, a metal including aluminum. The thickness of the second metal sheet 20b may be 3 µm to 20 µm.

The length of the second metal sheet 20b in the lateral direction may be substantially the same as the length of the first metal sheet 20a in the lateral direction, may be longer than the length of the first metal sheet 20a in the lateral direction, or may be shorter than the length of the first metal sheet 20a in the lateral direction.

The second metal sheet 20b is bonded to one end of the second current collecting layer 12b such that a predetermined interval 208 is provided between the second metal sheet 20b and the second active material layer 16b. In one embodiment, the predetermined interval 208 may be 0.1 mm to 10 mm or may be 1 mm to 5 mm.

Similar to the first metal sheet 20a, the second metal sheet 20b may be bonded to the second current collecting layer 12b by a method of forming an atomic-level bond (for example, a metallic bond) between the second metal sheet 20b and the second current collecting layer 12b. In one embodiment, the second metal sheet 20b is bonded to the second current collecting layer 12b by ultrasonic bonding.

The second metal sheet 20b has a second extending part 40b and a second bonding mark 24b.

### [Second extending part 40b]

The second extending part 40b is a portion of the second metal sheet 20b, which does not overlap with the current collector 3. The second extending part 40b discharges the heat received by the second metal sheet 20b from the current collector 3 to the outside. The length of the second extending part 40b in the lateral direction may be 0.5 mm to 20 mm or may be 2 mm to 15 mm. In addition, the length of the second extending part 40b in the lateral direction may be 10% to 90% or may be 30% to 80% of the total length of the second metal sheet 20b in the lateral direction.

The length of the second extending part 40b in the lateral direction may be substantially the same as the length of the first extending part 40a in the lateral direction, may be longer than the length of the first extending part 40a in the lateral direction, or may be shorter than the length of the first extending part 40a in the lateral direction.

### [Second bonding mark 24b]

The second bonding mark 24b is provided at a position where the second metal sheet 20b and the current collector 3 overlap with each other. The second bonding mark 24b is provided along the longitudinal direction of the second metal sheet 20b. In addition, as shown in Figure 6, the second bonding mark 24b is formed from the second metal sheet 20b to the second current collecting layer 12b and the first current collecting layer 12a.

In one embodiment, the second bonding mark 24b is provided at a position where the second bonding mark 24b does not interfere with the first bonding mark 24a. It can also be said that the second bonding mark 24b is provided at a position where at least a part of the second bonding mark 24b does not overlap with the first bonding mark 24a. It can also be said that the y coordinate where the second bonding mark 24b is provided is different from the y coordinate where the first bonding mark 24a is provided.

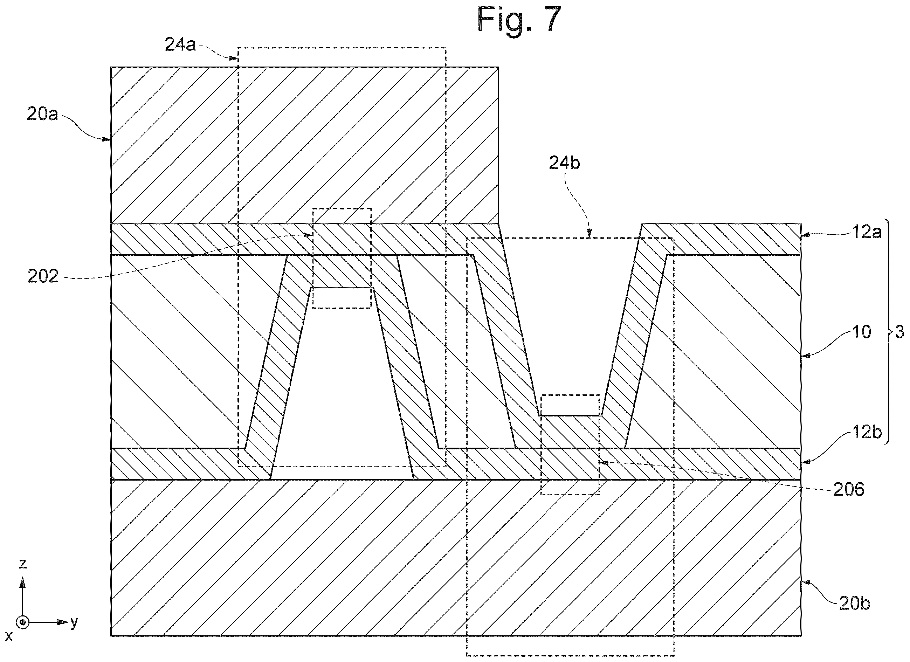

Figure 7 is an enlarged view of the periphery of the first bonding mark 24a and the second bonding mark 24b. As shown in Figure 7, the current collector 3 has a recessed shape in a direction from the first current collecting layer 12a toward the second current collecting layer 12b in a cross section including the second bonding mark 24b. That is, the second bonding mark 24b is formed by applying a pressure from a surface of the first current collecting layer 12a on which the second metal sheet 20b is not provided toward a surface of the second current collecting layer 12b on which the second metal sheet 20b is provided. In one embodiment, the second bonding mark 24b is formed by pressing a horn for ultrasonic bonding from the surface of the first current collecting layer 12a toward the surface of the second current collecting layer 12b.

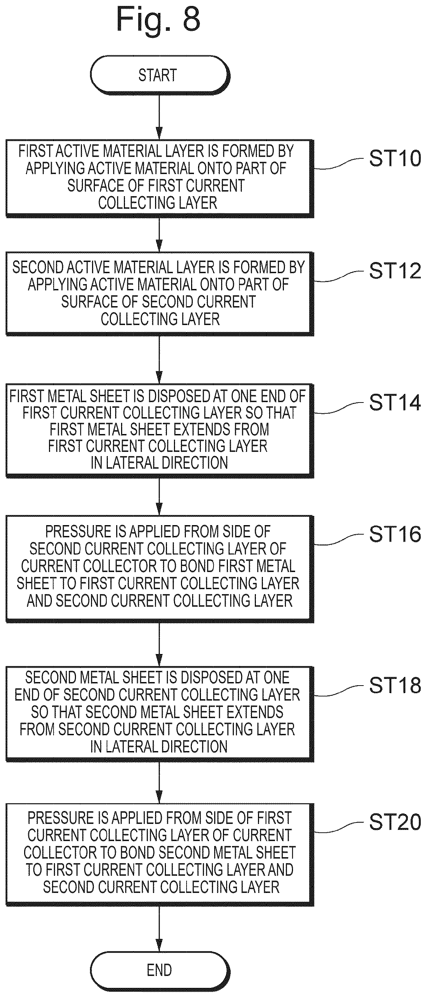

It is noted that in one embodiment, a site where the horn for ultrasonic bonding is pressed in order to form the first bonding mark 24a is covered with the second metal sheet 20b. This is because the second metal sheet 20b is disposed after the first bonding mark 24a is formed (see Figure 8 which will be described later).

The current collector 3 has, in a cross section including the second bonding mark 24b, a region 206 in which the second current collecting layer 12b and the first current collecting layer 12a are integrated. In one embodiment, in the region 206, the second metal sheet 20b, the second current collecting layer 12b, and the first current collecting layer 12a are melted by ultrasonic bonding. As a result, the second metal sheet 20b can be electrically connected to the second current collecting layer 12b and the first current collecting layer 12a that are provided on both surfaces of the resin layer 10 through the region 206.

### [Manufacturing method for electrode sheet 1]

Figure 8 is a flowchart for describing a manufacturing method for the electrode sheet 1 according to the second embodiment. It is noted that it is assumed that the current collector 3 is prepared in the initial state.

First, the first active material layer 16a is formed by applying an active material onto a part of the surface of the first current collecting layer 12a (ST10). In one embodiment, the first active material layer 16a is applied to a portion of the surface of the first current collecting layer 12a, excluding a portion for disposing the first metal sheet 20a.

Next, the second active material layer 16b is formed by applying the active material onto a part of the surface of the second current collecting layer 12b (S12). The second active material layer 16b is applied onto a portion of the surface of the second current collecting layer 12b, where the portion is a portion excluding a portion for disposing the second metal sheet 20b.

Next, the first metal sheet 20a is disposed at one end of the first current collecting layer 12a so that the first metal sheet 20a extends from the first current collecting layer 12a in the lateral direction (ST14). As a result, the first extending part 40a is formed. In addition, the first metal sheet 20a is disposed such that a predetermined interval 204 is provided between the first metal sheet 20a and the first active material layer 16a.

Next, a pressure is applied from the side of the second current collecting layer 12b of the current collector 3 to bond the first metal sheet 20a to the first current collecting layer 12a and the second current collecting layer 12b (ST16). As a result, the first bonding mark 24a including the region 202 in which the first metal sheet 20a, the first current collecting layer 12a, and the second current collecting layer 12b are integrated is formed.

Next, the second metal sheet 20b is disposed at one end of the second current collecting layer 12b so that the second metal sheet 20b extends from the second current collecting layer 12b in the lateral direction (ST18). As a result, the second extending part 40b is formed. In addition, the second metal sheet 20b is disposed such that a predetermined interval 208 is provided between the second metal sheet 20b and the second active material layer 16b.

Next, a pressure is applied from the side of the first current collecting layer 12a of the current collector 3 to bond the second metal sheet 20b to the first current collecting layer 12a and the second current collecting layer 12b (ST20). As a result, the second bonding mark 24b including the region 206 in which the second metal sheet 20b, the first current collecting layer 12a, and the second current collecting layer 12b are integrated is formed.

The electrode sheet 1 according to the second embodiment may have further improved availability as compared with the electrode sheet 1 according to the first embodiment. Specifically, since the two metal sheets of the first metal sheet 20a and the second metal sheet 20b are provided, the number of paths for extracting the electric power from the first current collecting layer 12a and the second current collecting layer 12b is increased. As a result, the electric resistance with respect to the electrode tab in a case where the secondary battery 2 is configured can be reduced. In addition, in the electrode sheet 1 according to the second embodiment, electric power can be continuously extracted from both the first current collecting layer 12a and the second current collecting layer 12b even in a case where one of the first metal sheet 20a or the second metal sheet 20b is damaged. More specifically, since the first current collecting layer 12a and the second current collecting layer 12b are respectively integrated with the first metal sheet 20a and the second metal sheet 20b in the region 202 and the region 206, even in a case where one metal sheet is damaged, the other metal sheet can maintain a conductive state with the external terminal. In addition, as described above, the first extending part 40a and the second extending part 40b can function as a heat radiator that discharges heat in the inside of the secondary battery 2 constituted by winding the electrode sheet 1, to the outside. Since the electrode sheet 1 has two extending parts of the first extending part 40a and the second extending part 40b, the heat dissipation properties of the secondary battery 2 constituted by winding the electrical heating sheet 1 can be further improved.

As described with reference to Figure 8, in the manufacturing step of the electrode sheet 1, the first metal sheet 20a is bonded to the first current collecting layer 12a and the second current collecting layer 12b (see ST16) before the second metal sheet 20b is disposed on the second current collecting layer 12b (see ST18). If the reverse order (that is, an order in which the second metal sheet 20b is disposed and then the first metal sheet 20a is bonded to the first current collecting layer 12a and the second current collecting layer 12b) is adopted, it is necessary to press a horn for ultrasonic bonding against the second metal sheet 20b. However, as described above, this method increases the possibility of the peeling of the bonding in a case where the horn is detached. Therefore, in order to suppress the decrease in the yield of the electrode sheet 1, the second metal sheet 20b may be disposed on and bonded to the second current collecting layer 12b (see ST18 to ST20) after the first metal sheet 20a is bonded to the first current collecting layer 12a (see ST10 to ST16).

In addition, Figure 7 illustrates a state in which the first metal sheet 20a is disposed not to cover a site where the second bonding mark 24b is to be formed in order to avoid pressing the horn from above the first metal sheet 20a in ST20; however, the present invention is not limited thereto. Specifically, in ST14, the first metal sheet 20a may be disposed to cover a site where the second bonding mark 24b is to be formed. In this case, for example, after the first metal sheet 20a is turned over so that the horn can be directly pressed against the first current collecting layer 12a, the second metal sheet 20b may be disposed on and bonded to the second current collecting layer 12b (see ST18 to ST20).

It is noted that the electrode sheet 1 according to the first embodiment can be manufactured by executing ST10 to ST16. That is, in order to manufacture the electrode sheet 1 according to the first embodiment, the steps (ST18 to ST20) of disposing and bonding the second metal sheet 20b as the second metal sheet are not necessary.

### <Configuration example of secondary battery 2 using electrode sheet 1>

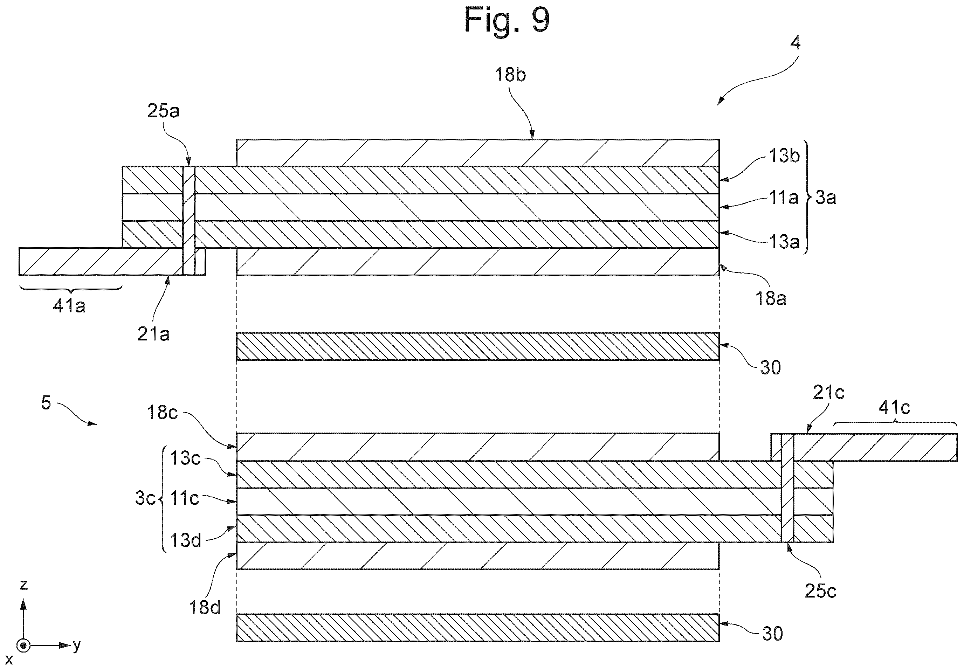

Figure 9 to Figure 11 are views for describing a configuration example of the secondary battery 2 using the electrode sheet 1 according to the first embodiment.

Figure 9 is a view for describing a structure of a laminated sheet for manufacturing the secondary battery 2. The laminated sheet is composed of a positive electrode sheet 4, a separator 30, and a negative electrode sheet 5. In addition, the secondary battery 2 may further contain an electrolyte solution.

### [Positive electrode sheet 4]

In one embodiment, the positive electrode sheet 4 is composed of a positive electrode-side current collector 3a, a first positive electrode active material layer 18a and a second positive electrode active material layer 18b, and a positive electrode-side metal sheet 21a.

The positive electrode-side current collector 3a corresponds to the current collector 3 of the electrode sheet 1. The positive electrode-side current collector 3a is composed of a first positive electrode-side current collecting layer 13a corresponding to the first current collecting layer 12a of the electrode sheet 1, a second positive electrode-side current collecting layer 13b corresponding to the second current collecting layer 12b of the electrode sheet 1, and a positive electrode-side resin layer 11a corresponding to the resin layer 10 of the electrode sheet 1.

The positive electrode-side metal sheet 21a corresponds to the first metal sheet 20a of the electrode sheet 1. A positive electrode-side bonding mark 25a corresponding to the first bonding mark 24a of the electrode sheet 1 is provided in the positive electrode-side metal sheet 21a. In addition, the positive electrode-side metal sheet 21a includes a positive electrode-side extending part 41a corresponding to the first extending part 40a of the electrode sheet 1. In one example, the material of the positive electrode-side metal sheet 21a is a metal including aluminum.

The first positive electrode active material layer 18a and the second positive electrode active material layer 18b are constituted by using a positive-electrode active material as the active material of the first active material layer 16a and the second active material layer 16b in the electrode sheet 1.

In one embodiment, in the positive electrode sheet 4, the positive electrode-side metal sheet 21a is bonded to one end of the first positive electrode-side current collecting layer 13a in the lateral direction. The positive electrode-side metal sheet 21a is electrically connected to the first positive electrode-side current collecting layer 13a and the second positive electrode-side current collecting layer 13b through the positive electrode-side bonding mark 25a (see Figure 4 and the like).

In one embodiment, at least one of the first positive electrode active material layer 18a and the second positive electrode active material layer 18b may contain one or more components other than the positive-electrode active material.

In one embodiment, at least one of the first positive electrode active material layer 18a and the second positive electrode active material layer 18b may contain a positive-electrode sacrificial material. The positive-electrode sacrificial material is a lithium-containing compound that causes an oxidation reaction and substantially does not cause a reduction reaction in a charge/discharge potential range of the positive-electrode active material.

In one embodiment, at least one of the first positive electrode active material layer 18a and the second positive electrode active material layer 18b may contain a gel electrolyte. The gel electrolyte makes it possible to improve the adhesive force between the first positive electrode active material layer 18a and the positive electrode-side current collector 3a and between and the second positive electrode active material layer 18b and the positive electrode-side current collector 3a. In one example, the gel electrolyte contains a polymer, an organic solvent, and a lithium salt. The polymer in the gel electrolyte may be, for example, a copolymer of polyethylene and/or polyethylene oxide, polyvinylidene fluoride, a copolymer of polyvinylidene fluoride and hexafluoropropylene, or the like.

In one embodiment, at least one of the first positive electrode active material layer 18a and the second positive electrode active material layer 18b may contain a conductive auxiliary agent and/or a binder. In one example, the conductive auxiliary agent is carbon black, a single-walled carbon nanotube (SWCNT), a multi-walled carbon nanotube (MWCNT), a carbon nanofiber (CF), or the like. In one example, the binder is polyvinylidene fluoride, polytetrafluoroethylene, styrene butadiene rubber, an acrylic resin, a polyimide resin, or the like. In one embodiment, the content of the conductive auxiliary agent is 0.5% by mass or more and 30% by mass or less with respect to the entire first positive electrode active material layer 18a and the entire second positive electrode active material layer 18b. In one embodiment, the content of the binder may be 0.5% by mass or more and 30% by mass or less with respect to the entire first positive electrode active material layer 18a and the entire second positive electrode active material layer 18b.

In one embodiment, at least one of the first positive electrode active material layer 18a or the second positive electrode active material layer 18b may contain a polymer electrolyte. In one example, the polymer electrolyte is a solid polymer electrolyte that mainly contains a polymer and an electrolyte, and a semi-solid polymer electrolyte that mainly contains a polymer, an electrolyte, and a plasticizer. In one embodiment, the total content of the polymer electrolyte may be 0.5% by mass or more and 30% by mass or less with respect to the entire first positive electrode active material layer 18a and the entire second positive electrode active material layer 18b.

### [Separator 30]

As shown in Figure 9, the separator 30 is disposed between the positive electrode sheet 4 and the negative electrode sheet 5 and on a surface of the negative electrode sheet 5, which does not face the positive electrode sheet 4. The separator 30 physically and/or electrically isolates the positive electrode sheet 4 and the negative electrode sheet 5 from each other and also ensures the ion conductivity of lithium ions. In one embodiment, the separator 30 may be at least one kind selected from the group consisting of a porous member having insulating properties, a polymer electrolyte, a gel electrolyte, and an inorganic solid electrolyte. As the separator 30, one kind of member may be used alone, or two or more kinds of members may be used in combination.

In a case where the separator 30 includes a porous member having insulating properties, the pores of the porous member are filled with a substance having ion conductivity (an electrolyte solution, a polymer electrolyte, a gel electrolyte, and/or the like). As a result, the separator 30 exhibits ion conductivity. A material constituting the porous member having insulating properties is not particularly limited, and examples thereof include an insulating polymer material, and specific examples thereof include polyethylene (PE) and polypropylene (PP). That is, the separator 30 may be a porous polyethylene (PE) film, a porous polypropylene (PP) film, or a laminated structure thereof.

In one embodiment, one surface or both surfaces of the separator 30 may be coated with a separator coating layer. As a result, the cycle characteristics of the secondary battery 2 can be improved. In one embodiment, the separator coating layer may be a film that is continuous with a uniform thickness in an area of 50% or more of the surface of the separator 30. In one embodiment, the separator coating layer may contain a binder such as polyvinylidene fluoride (PVDF), a mixed material of styrene butadiene rubber and carboxymethyl cellulose (SBR-CMC), or polyacrylic acid (PAA). In one embodiment, the separator coating layer may be constituted by adding inorganic particles such as silica, alumina, titania, zirconia, or magnesium hydroxide to the above-described binder.

In one embodiment, the average thickness of the separator 30 (including a coating layer in a case where the separator 30 includes the coating layer) may be 3.0 µm or more and 40 µm or less. As a result, the volume occupied by the separator 30 can be reduced while the positive electrode sheet 4 and the negative electrode sheet 5 are isolated from each other. In one embodiment, the average thickness of the separator 30 may be 5.0 µm or more and 30 µm or less, 7.0 µm or more and 10 µm or less, or 10 µm or more and 20 µm or less.

### [Negative electrode sheet 5]

In one embodiment, the negative electrode sheet 5 is composed of a negative electrode-side current collector 3c, a first negative electrode active material layer 18c and a second negative electrode active material layer 18d, and a negative electrode-side metal sheet 21c.

The negative electrode-side current collector 3c corresponds to the current collector 3 of the electrode sheet 1. The negative electrode-side current collector 3c is composed of a first negative electrode-side current collecting layer 13c corresponding to the first current collecting layer 12a of the electrode sheet 1, a second negative electrode-side current collecting layer 13d corresponding to the second current collecting layer 12b of the electrode sheet 1, and a negative electrode-side resin layer 11c corresponding to the resin layer 10 of the electrode sheet 1. In addition, the negative electrode-side metal sheet 21c corresponds to the first metal sheet 20a of the electrode sheet 1.

The negative electrode-side metal sheet 21c corresponds to the first metal sheet 20a of the electrode sheet 1. A negative electrode-side bonding mark 25c corresponding to the first bonding mark 24a of the electrode sheet 1 is provided in the negative electrode-side metal sheet 21c. In addition, the negative electrode-side metal sheet 21c includes a negative electrode-side extending part 41c corresponding to the first extending part 40a of the electrode sheet 1. In one example, the material of the negative electrode-side metal sheet 21c is a metal including copper.

The first negative electrode active material layer 18c and the second negative electrode active material layer 18d are constituted by using a negative-electrode active material as the active material of the first active material layer 16a and the second active material layer 16b in the electrode sheet 1.

In one embodiment, in the negative electrode sheet 5, the negative electrode-side metal sheet 21c is bonded to one end of the first negative electrode-side current collecting layer 13c in the lateral direction. The negative electrode-side metal sheet 21c is electrically connected to the first negative electrode-side current collecting layer 13c and the second negative electrode-side current collecting layer 13d through the negative electrode-side bonding mark 25c (see Figure 4 and the like).

**In** one embodiment, at least one of the first negative electrode active material layer 18c and the second negative electrode active material layer 18d may contain a gel electrolyte. The gel electrolyte makes it possible to improve the adhesive force between the first negative electrode active material layer 18c and the negative electrode-side current collector 3c and between the second negative electrode active material layer 18d and the negative electrode-side current collector 3c. **In** one example, the gel electrolyte contains a polymer, an organic solvent, and a lithium salt. The polymer in the gel electrolyte may be, for example, a copolymer of polyethylene and/or polyethylene oxide, polyvinylidene fluoride, a copolymer of polyvinylidene fluoride and hexafluoropropylene, or the like.

**In** one embodiment, at least one of the first negative electrode active material layer 18c and the second negative electrode active material layer 18d may contain a binder. **In** one example, the binder is polyvinylidene fluoride, polytetrafluoroethylene, styrene butadiene rubber, an acrylic resin, a polyimide resin, or the like. **In** one embodiment, the content of the conductive auxiliary agent is 0.5% by mass or more and 30% by mass or less with respect to the entire first negative electrode active material layer 18c and the entire second negative electrode active material layer 18d. **In** one embodiment, the content of the binder may be 0.5% by mass or more and 30% by mass or less with respect to the entire first negative electrode active material layer 18c and the entire second negative electrode active material layer 18d.

In one embodiment, at least one of the first negative electrode active material layer 18c and the second negative electrode active material layer 18d may contain a polymer electrolyte. In one example, the polymer electrolyte is a solid polymer electrolyte that mainly contains a polymer and an electrolyte, and a semi-solid polymer electrolyte that mainly contains a polymer, an electrolyte, and a plasticizer. In one embodiment, the total content of the polymer electrolyte may be 0.5% by mass or more and 30% by mass or less with respect to the entire first negative electrode active material layer 18c and the entire second negative electrode active material layer 18d.

### [Electrolyte solution]

In one embodiment, the secondary battery 2 may contain an electrolyte solution. The electrolyte solution is a liquid containing a solvent and an electrolyte, and it has ion conductivity. The electrolyte solution may be rephrased as a liquid electrolyte and act as a conductive path for lithium ions. Therefore, in a case where the secondary battery 2 has an electrolyte solution, the internal resistance is reduced, and the energy density, the capacity, and the cycle characteristics can be improved.

The electrolyte solution may be, for example, a solution that fills the housing (pouch) of the secondary battery 2. In addition, for example, the electrolyte solution may be infiltrated into the separator 30, and in addition, it may be retained by the polymer to constitute a polymer electrolyte or a gel electrolyte.

The electrolyte contained in the electrolyte solution may be, for example, a lithium salt. The lithium salt may be, for example, one selected from the group consisting of Lil, LiCl, LiBr, LiF, LiBF₄, LiPF₆, LiAsF₆, LiSO₃CF₃, LiN(SO₂F)₂, LiN(SO₂CF₃)₂, LiN(SO₂CF₃CF₃)₂, LiB(O₂C₂H₄)₂, LiB(C₂O₄)₂, LiB(O₂C₂H₄)F₂, LiB(OCOCF₃)4, LiNO₃, and Li₂SO₄, or a combination of two or more thereof.

The solvent contained in the electrolyte solution may be, for example, a non-aqueous solvent having a fluorine atom (hereinafter, referred to as a "fluorinated solvent") and a non-aqueous solvent not having a fluorine atom (hereinafter, referred to as a "non-fluorine solvent").

The fluorinated solvent may be, for example, 1,1,2,2-tetrafluoroethyl-2,2,3,3-tetrafluoropropyl ether, 1,1,2,2-tetrafluoroethyl-2,2,2-trifluoroethyl ether, or 1H,1H,5H-octafluoropentyl-1,1,2,2-tetrafluoroethyl ether.

The non-fluorine solvent may be, for example, triethylene glycol dimethyl ether, tetraethylene glycol dimethyl ether, 1,2-dimethoxyethane, dimethoxyethane, dimethoxypropane, dimethoxybutane, diethylene glycol dimethyl ether, acetonitrile, dimethyl carbonate, diethyl carbonate, ethyl methyl carbonate, ethylene carbonate, propylene carbonate, chloroethylene carbonate, methyl acetate, ethyl acetate, propyl acetate, methyl propionate, ethyl propionate, trimethyl phosphate, triethyl phosphate, or 12-crown-4.

One or two or more of the fluorinated solvents and/or the non-fluorine solvents may be freely used either singly or in combination at any proportion. The contents of the fluorinated solvent and the non-fluorine solvent are not particularly limited, and the proportion of the fluorinated solvent in the total volume of the solvent may be 0% to 100% by volume, and the proportion of the non-fluorine solvent in the total volume of the solvent may be 0% to 100% by volume.

### [Manufacturing method for secondary battery 2]

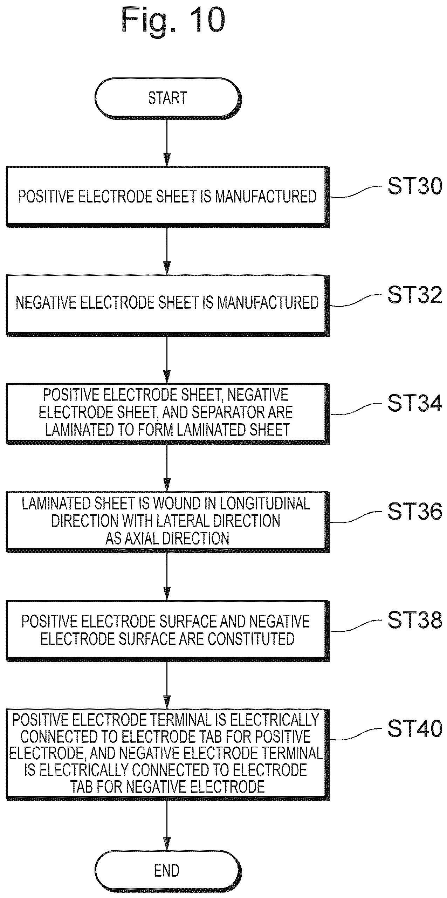

An example of a manufacturing method for the secondary battery 2 will be described with reference to Figure 10. It is noted that in the initial state, it is assumed that the separator 30 is prepared.

First, the positive electrode sheet 4 is manufactured (ST30). The positive electrode sheet 4 may be manufactured based on, for example, ST10 to ST16 of Figure 8.

Next, the negative electrode sheet 5 is manufactured (ST32). The negative electrode sheet 5 may be manufactured based on, for example, ST10 to ST16 of Figure 8.

Next, the positive electrode sheet 4, the negative electrode sheet 5, and the separator 30 are laminated to form a laminated sheet (S34). In one embodiment, the laminated sheet may be constituted by laminating the positive electrode sheet 4, the first separator 30, the negative electrode sheet 5, and the second separator 30 in this order as shown in Figure 9. In addition, in one embodiment, the positive electrode sheet 4 and the negative electrode sheet 5 are laminated such that a direction in which the positive electrode-side extending part 41a extends and a direction in which the negative electrode-side extending part 41c extends face away from each other.

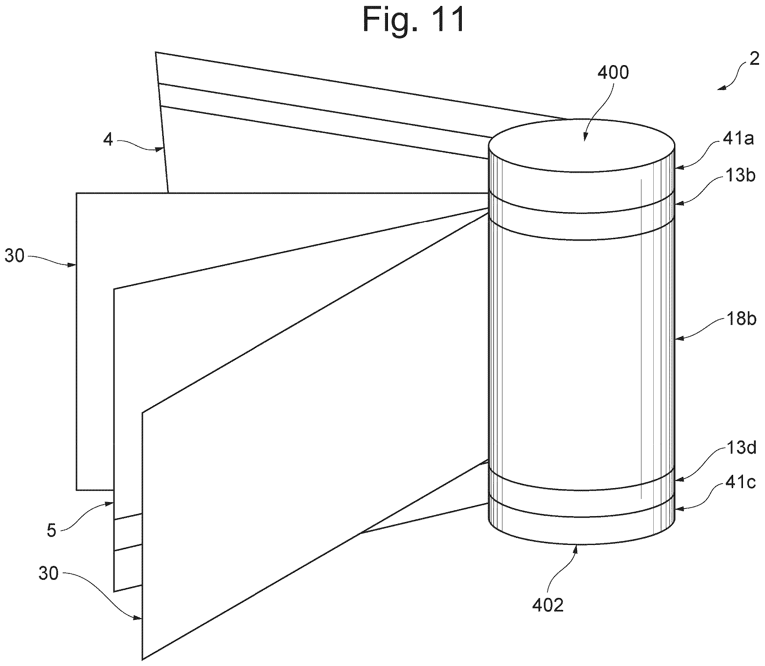

Next, the laminated sheet is wound in the longitudinal direction with the lateral direction of the laminated sheet as the axial direction (ST36). In this case, the laminated sheet may be wound around the winding core as the center. Figure 11 is a view for describing an example of the winding of the laminated sheet. In a case where the laminated sheet of Figure 9 is wound as shown in Figure 11, the first positive electrode active material layer 18a and the first negative electrode active material layer 18c face each other with the first separator 30 sandwiched therebetween, and the second positive electrode active material layer 18b and the second negative electrode active material layer 18d face each other with the second separator 30 sandwiched therebetween.

Next, a positive electrode surface 400 is constituted by folding the positive electrode-side extending part 41a of the wound laminated sheet, and a negative electrode surface 402 is constituted by folding the negative electrode-side extending part 41c of the wound laminated sheet (ST38).

Next, the positive electrode surface 400 is electrically connected to an electrode tab for a positive electrode in the secondary battery 2, and the negative electrode surface 402 is electrically connected to an electrode tab for a negative electrode in the secondary battery 2 (ST40). In this case, the positive electrode surface 400 is connected to be closely attached to the tab for a positive electrode. Similarly, the negative electrode surface 402 is connected to be closely attached to the tab for a negative electrode.

### [Method of using secondary battery]

The secondary battery 2 is charged/discharged by connecting the electrode tab for a positive electrode to one end of the external circuit and connecting an electrode tab for a negative electrode to the other end of the external circuit. The external circuit may be, for example, a resistor, a power source, an apparatus, a device, another battery, or a potentiostat.

In a case where a voltage is applied between the electrode tab for a positive electrode and the electrode tab for a negative electrode such that a current flows from the electrode tab for a negative electrode to the electrode tab for a positive electrode through an external circuit, the secondary battery 2 is charged. In a case where the electrode tab 40 for a positive electrode and the electrode tab for a negative electrode in the secondary battery 2 after charging are connected through a desired external circuit, the secondary battery 2 is discharged.

### [Effect of secondary battery 2]

According to the secondary battery 2, both the value of the electric resistance of the positive electrode surface 400 and the negative electrode surface 402, and the variation in the electric resistance can be suppressed. In addition, since the positive electrode-side metal sheet 21a is electrically conductive on both surfaces in advance unlike the current collector 3, the folded metal sheets are bonded to each other with low resistance without interposing the resin layer 10 therebetween when the positive electrode-side metal sheet 21a is folded to constitute the positive electrode surface 400. As a result, the electric resistance of the entire positive electrode surface 400 is uniform, and the average electric resistance of the entire positive electrode surface 400 is suppressed. Similarly, both the value of the electric resistance and the variation in the electric resistance are also suppressed in the negative electrode surface 402.

It is noted that the variation in the electric resistance includes a variation in the electric resistance of the positive electrode surface 400 (or the negative electrode surface 402) between the different secondary batteries 2 and a variation in the electric resistance of the positive electrode surface 400 (or the negative electrode surface 402) at each position in the same secondary battery 2.

### <Modification example>

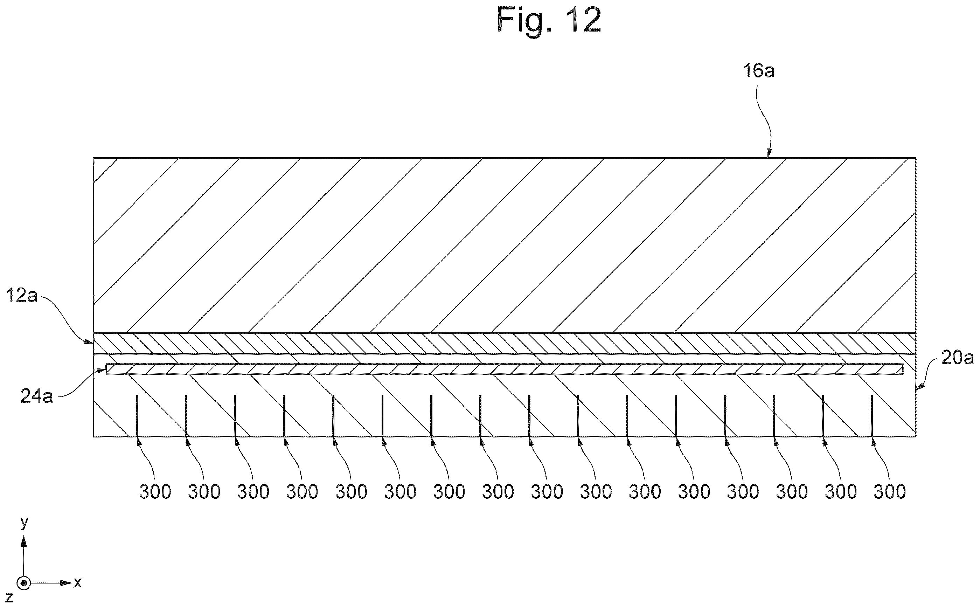

Figure 12 to Figure 18 are views for describing modification examples of the electrode sheet 1.

### [Modification example relating to shape of first extending part 40a]

In the above-described embodiment, the first extending part 40a has been described as being continuous along the longitudinal direction; however, the present invention is not limited thereto. That is, the first extending part 40a may have a non-continuous portion along the longitudinal direction. Specifically, the first extending part 40a may have a slit 300 and/or a recessed part 302.

Figure 12 is a view for describing the electrode sheet 1 in a case where the first extending part 40a has the slits 300. The slits 300 may be provided to be spaced apart at substantially regular intervals in the first extending part 40a. By providing the slits 300 in the first extending part 40a, the first extending part 40a is easily folded in a case of forming the positive electrode surface 400 and the negative electrode surface 402. As a result, the physical unevenness of the positive electrode surface 400 and the negative electrode surface 402 can be further reduced. In addition, the physical unevenness in the positive electrode surface 400 is correlated with the magnitude of the electric resistance of the positive electrode surface 400. Therefore, by providing the slits 300 in the first extending part 40a, the variation in the electric resistance of the positive electrode surface 400 and the negative electrode surface 402 in manufacturing is further suppressed. In addition, in a case where the first extending part 40a is easily folded, the contact area between the metal sheets in the positive electrode surface 400 and the negative electrode surface 402 increases, and thus the electric resistance is suppressed.

In one embodiment, the slit 300 may be provided along the lateral direction. In addition, in order to avoid contamination in manufacturing, the slit 300 may be provided in the first extending part 40a before the first metal sheet 20a is bonded to the first current collecting layer 12a. For example, a step of providing the slit 300 in the first extending part 40a of the first metal sheet 20a may be provided between ST12 and ST14 in Figure 8.

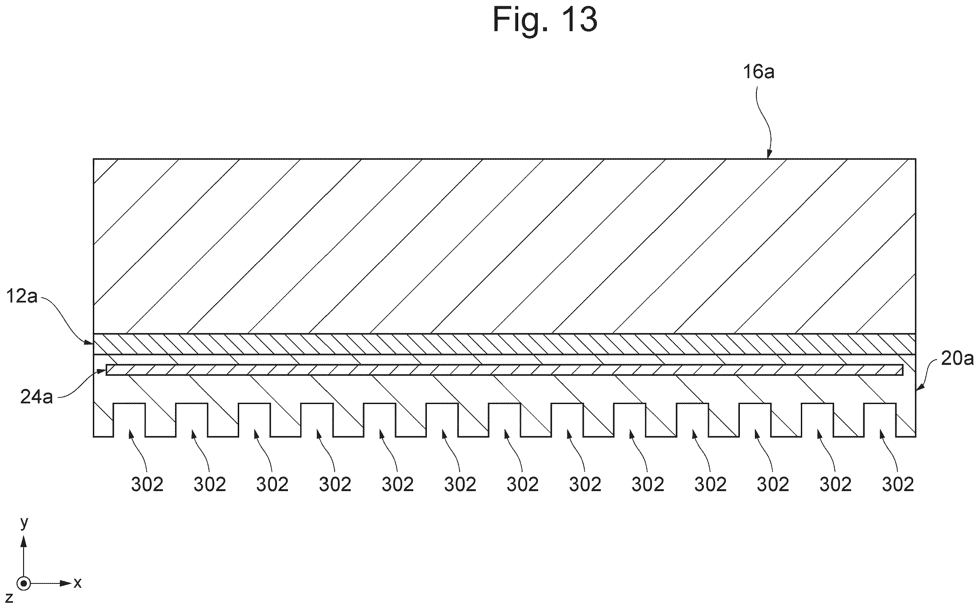

Figure 13 is a view for describing the electrode sheet 1 when the first extending part 40a has the recessed part 302 having a rectangular shape. The recessed part 302 is recessed in the lateral direction and is provided along the longitudinal direction. In addition, the recessed parts 302 may be provided to be spaced apart from each other at substantially regular intervals. By providing the recessed part 302 in the first extending part 40a, the first extending part 40a is easily folded when forming the positive electrode surface 400 and the negative electrode surface 402. As a result, the physical unevenness of the positive electrode surface 400 and the negative electrode surface 402 can be further reduced. That is, the variation in the electric resistance of the positive electrode surface 400 and the negative electrode surface 402 in manufacturing is further suppressed. In addition, in a case where the first extending part 40a is easily folded, the contact area between the metal sheets in the positive electrode surface 400 and the negative electrode surface 402 increases, and thus the electric resistance is suppressed.

In addition, in order to avoid contamination in manufacturing, the recessed part 302 may be provided in the first extending part 40a before the first metal sheet 20a is bonded to the first current collecting layer 12a. For example, a step of providing the recessed part 302 in the first extending part 40a of the first metal sheet 20a may be provided between ST12 and ST14 in Figure 8.

### [Modification example relating to shape of first bonding mark 24a]

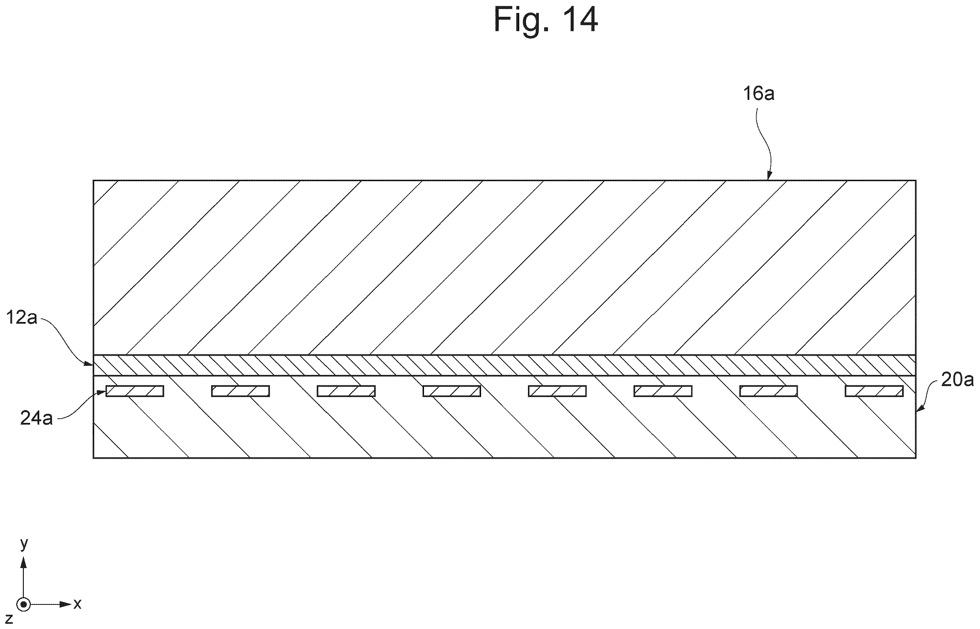

In the above-described embodiment, the first bonding mark 24a has been described as being linear shape; however, the present invention is not limited thereto. For example, as shown in Figure 14, the first bonding mark 24a may have a dot shape. In a case where the first bonding mark 24a has a dot shape, energy (for example, force, vibration, heat, and the like) that is applied to the bonding site can be concentrated in a small area. That is, in a case where the first bonding mark 24a is formed into a dot shape, the first metal sheet 20a can be more firmly bonded to the current collector 3. It is noted that the first bonding mark 24a is not limited to the above-described example and may have any shape. The same applies to other bonding marks.

### [Modification example relating to bonding method for first metal sheet 20a and second metal sheet 20b]

In the above-described embodiment, the first metal sheet 20a and the second metal sheet 20b have been described as being bonded to the current collector 3 by bonding marks different from each other (see Figure 6 to Figure 8); however, the present invention is not limited thereto. Specifically, the first metal sheet 20a and the second metal sheet 20b may be collectively (that is, by a single bonding mark) bonded to the current collector 3. In a case where the electrode sheet 1 is constituted in this way, the man-hours in manufacturing can be reduced.

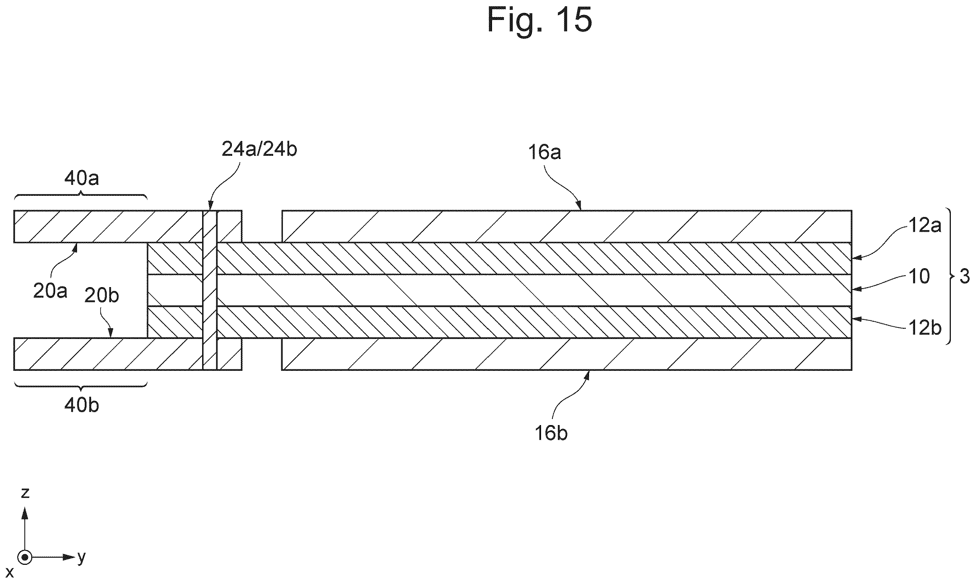

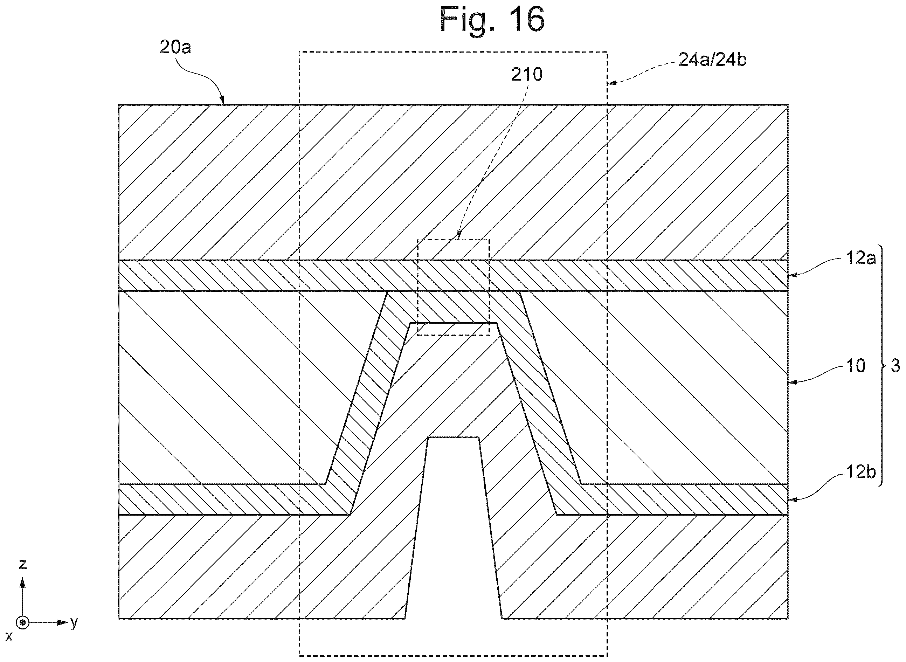

Figure 15 and Figure 16 are views for describing the electrode sheet 1 in a case where the first metal sheet 20a and the second metal sheet 20b are collectively bonded to the current collector 3. In Figure 15, the electrode sheet 1 has a single bonding mark 24a/24b. In this way, both the first metal sheet 20a and the second metal sheet 20b may be bonded by the single bonding mark 24a/24b although, in the above-described embodiment, the description has been made such that the first metal sheet 20a is bonded to the current collector 3 by the first bonding mark 24a, and the second metal sheet 20b is bonded to the current collector 3 by the second bonding mark 24b.

Figure 16 is an enlarged view of the periphery of the single bonding mark 24a/24b. In this way, the electrode sheet 1 may have a region 210 in which the first metal sheet 20a, the second metal sheet 20b, the first current collecting layer 12a, and the second current collecting layer 12b are integrated although the electrode sheet 1 described with reference to Figure 7 has the region 202 in which the first metal sheet 20a, the first current collecting layer 12a, and the second current collecting layer 12b are integrated, and the region 206 in which the second metal sheet 20b, the first current collecting layer 12a, and the second current collecting layer 12b are integrated. The single bonding mark 24a/24b shown in Figure 16 may be formed by pressing a horn or the like from above the second metal sheet 20b to bond the second metal sheet 20b, the current collector 3, and the first metal sheet 20a.

In the above-described embodiment, the description has been made such that the first metal sheet 20a is bonded to the first current collecting layer 12a by pressing a horn or the like from above the second current collecting layer 12b on a side opposite to the surface on which the first metal sheet 20a is provided, and the second metal sheet 20b is bonded to the second current collecting layer 12b by pressing a horn or the like from above the first current collecting layer 12a on a side opposite to the surface on which the second metal sheet 20b is provided (see Figure 7); however, the present invention is not limited thereto. Specifically, at least one of the first metal sheet 20a and the second metal sheet 20b may be bonded to the current collector 3 by pressing a horn or the like from above the metal sheet.

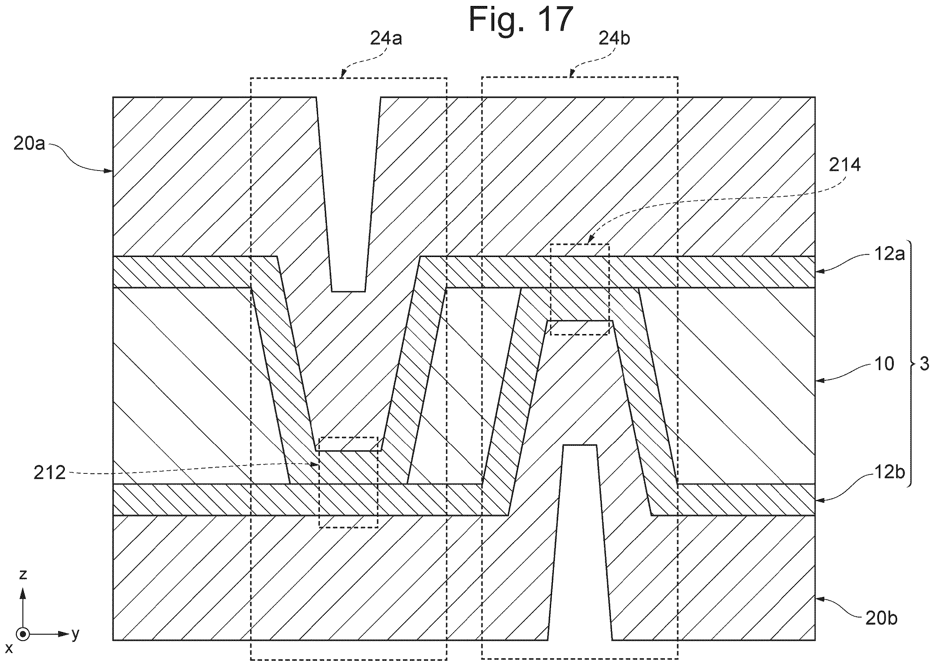

More specifically, the first metal sheet 20a may be bonded to the first current collecting layer 12a by pressing a horn or the like from above the first metal sheet 20a. In addition, the second metal sheet 20b may be bonded to the second current collecting layer 12b by pressing a horn or the like from above the second metal sheet 20b. Figure 17 is an example of an enlarged view of the periphery of the first bonding mark 24a and the second bonding mark 24b in a case where the bonding is carried out in this manner. As shown in Figure 17, the current collector 3 has a recessed shape in a direction from the first current collecting layer 12a toward the second current collecting layer 12b in a cross section including the first bonding mark 24a. In addition, the current collector 3 has a recessed shape in a direction from the second current collecting layer 12b toward the first current collecting layer 12a in a cross section including the second bonding mark 24b. In addition, in the respective first bonding marks 24a and second bonding marks 24b, the current collector 3 includes a region 212 and a region 214, in which the first metal sheet 20a, the first current collecting layer 12a, the second current collecting layer 12b, and the second metal sheet 20b are integrated. In a case where the bonding is carried out in this way, the first metal sheet 20a and the second metal sheet 20b may be disposed with the current collector 3 being sandwiched therebetween and then the first metal sheet 20a and the second metal sheet 20b may be bonded to the current collector 3 in order or in parallel. Therefore, the manufacturing line can be simplified.

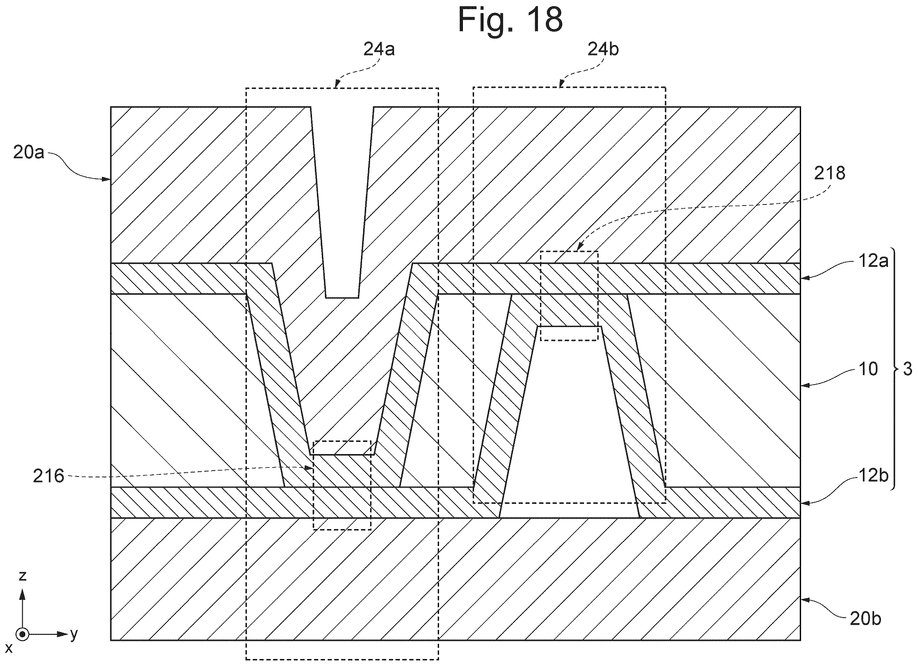

Figure 18 is another example of the enlarged view of the periphery of the first bonding mark 24a and the second bonding mark 24b. The bonding mark shown in Figure 18 may be formed, for example, as follows. First, the first metal sheet 20a is disposed on the first current collecting layer 12a of the current collector 3. Then, the second bonding mark 24b is formed by pressing a horn or the like from the side of the second current collecting layer 12b of the current collector 3. The second bonding mark 24b includes a region 218 in which the first metal sheet 20a, the first current collecting layer 12a, and the second current collecting layer 12b are integrated. Next, the second metal sheet 20b is disposed on the second current collecting layer 12b. Then, the first bonding mark 24a is formed by pressing a horn or the like from above the first metal sheet 20a. The first bonding mark 24a includes a region 216 in which the first metal sheet 20a, the first current collecting layer 12a, the second current collecting layer 12b, and the second metal sheet 20b are integrated. As described above, the region 216 included in the first bonding mark 24a and the region 218 included in the second bonding mark 24b may be regions in which layers different from each other are integrated.

### [Modification example relating to bonding of first extending part 40a and second extending part 40b]

In the above-described embodiment, the example in which the first extending part 40a and the second extending part 40b are not bonded to each other has been described (see Figure 6); however, the present invention is not limited thereto. Specifically, the first extending part 40a may be bonded to the second extending part 40b.

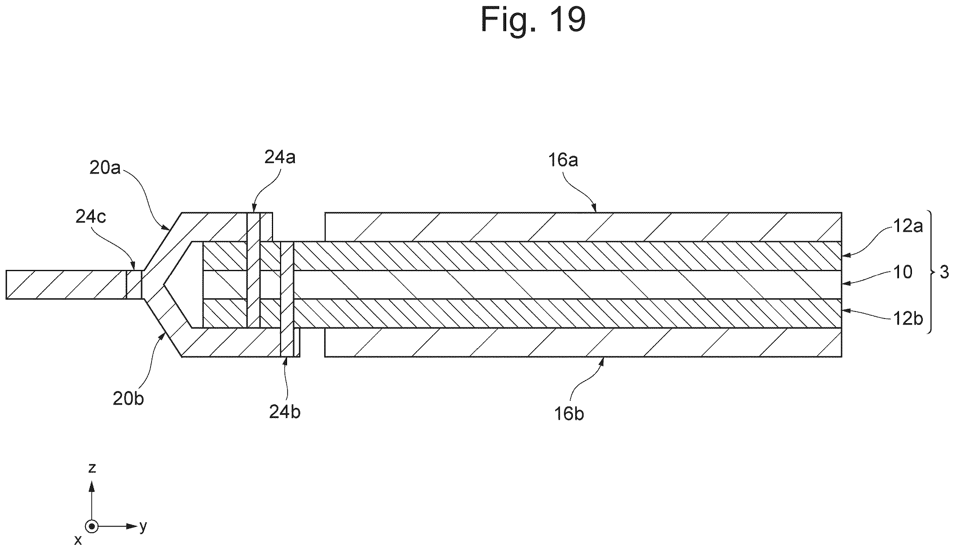

Figure 19 is a view for describing the electrode sheet 1 in which the first extending part 40a and the second extending part 40b are bonded to each other. In Figure 19, the first extending part 40a and the second extending part 40b are bonded to each other by a third bonding mark 24c. By constituting the electrode sheet 1 in this way, the variation in the electric resistance of the positive electrode surface 400 and the negative electrode surface 402 is further suppressed. If the first extending part 40a and the second extending part 40b are not bonded to each other, the electric resistances of the first extending part 40a and the second extending part 40b may be slightly different from each other. As a result, the positive electrode surface 400 and the negative electrode surface 402 in a case where the electrode sheet 1 is wound have different electric resistances depending on the positions. On the other hand, in a case where the electrode sheet 1 is wound in a state where the first extending part 40a and the second extending part 40b are bonded to each other, the positive electrode surface 400 and the negative electrode surface 402 have substantially constant electric resistance regardless of the positions.

### [Modification example relating to negative electrode sheet 5]

In the above-described embodiment, the description has been made such that the negative electrode sheet 5 includes the first negative electrode active material layer 18c and the second negative electrode active material layer 18d; however, the present invention is not limited thereto. The negative electrode sheet 5 may be substantially free of a negative-electrode active material.

In one embodiment, the negative electrode sheet 5 does not have a negative-electrode active material before the initial charging of the battery (in a state from the assembly of the battery until the first charging is carried out). In the secondary battery 2, charging/discharging may be carried out by, after the initial charging, depositing lithium metal on the negative electrode and electrolytically dissolving the deposited lithium metal. In this case, the volume and the mass occupied by the negative-electrode active material are suppressed, the volume and the mass of the entire battery are reduced, and, in principle, the energy density is increased. It is noted that the fact that "lithium metal is deposited on the negative electrode" includes not only that lithium metal is deposited on the surface of the negative electrode but also that lithium metal is deposited on the surface of the solid electrolyte interface (SEI) layer or the surface or inside of the buffer functional layer, which will be described later.

In one embodiment, the layer thickness of the negative-electrode active material that is deposited on the negative electrode sheet 5 at the end of discharging (for example, a state where the open circuit voltage of the battery is 2.5 V or more and 3.6 V or less) is 25 µm or less. In one embodiment, the layer thickness of the negative-electrode active material at the end of discharging may be 20 µm or less, 15 µm or less, 10 µm or less, or 5 µm or less, and it may be 0 µm. In a case where the negative electrode sheet 5 is substantially free of a negative-electrode active material, the energy density per volume can be improved in addition to the weight energy density. It is noted that in this case, the secondary battery 2 can also be referred to as an "anode-free lithium battery", a "zero-anode lithium battery", or an "anode-less lithium battery".

In one embodiment, in a case where the mass of lithium metal deposited on the negative electrode in a state where the voltage is 4.2 V is denoted as M_{4.2} and the same mass at a voltage of 3.0 V is denoted as M_{3.0}, M_{3.0}/M_{4.2} may be 40% or less or 35% or less. In one embodiment, the ratio M_{3.0}/M_{4.2} may be 1.0% or more, 2.0% or more, 3.0% or more, or 4.0% or more.

### <Embodiment of present disclosure>

The embodiments of the present disclosure further include the following aspects.

### [Addendum 1]

An electrode sheet 1 that has a longitudinal direction and a lateral direction and constitutes an electrode of a secondary battery 2 by being wound with the lateral direction as an axial direction, the electrode sheet 1 comprising: a current collector 3 that includes a resin layer 10, and a first current collecting layer 12a and a second current collecting layer 12b that are respectively provided on both surfaces of the resin layer 10; a first active material layer 16a that is provided on a surface of the first current collecting layer 12a on a side opposite to the resin layer 10; and a first metal sheet 20a that is bonded to one end of the first current collecting layer 12a in the lateral direction and has a first bonding mark 24a formed along the longitudinal direction by the bonding, where the first metal sheet 20a has a first extending part 40a that extends from the first current collecting layer 12a in the lateral direction.

### [Addendum 2]

The electrode sheet 1 according to Addendum 1, in which the first extending part 40a includes one or more slits 300.

### [Addendum 3]

The electrode sheet 1 according to Addendum 2, in which the one or more slits 300 are provided along the lateral direction.

### [Addendum 4]

The electrode sheet 1 according to any one of Addenda 1 to 3, in which the first extending part 40a includes a plurality of recessed parts 302 that are recessed in the lateral direction, along the longitudinal direction.

### [Addendum 5]

The electrode sheet 1 according to Addendum 4, in which the plurality of recessed parts 302 are provided to be spaced apart from each other at regular intervals.

### [Addendum 6]

The electrode sheet 1 according to Addendum 4, in which the recessed part 302 has a rectangular shape.

### [Addendum 7]

The electrode sheet 1 according to any one of Addenda 1 to 6, in which the first bonding mark 24a is a welding mark.

### [Addendum 8]

The electrode sheet 1 according to Addendum 7, in which the first bonding mark 24a is formed from the first metal sheet 20a to the first current collecting layer 12a.

### [Addendum 9]

The electrode sheet 1 according to Addendum 8, in which the first bonding mark 24a is formed to have a linear shape or a shape of a plurality of dots along the longitudinal direction.

### [Addendum 10]

The electrode sheet 1 according to Addendum 7, in which the first bonding mark 24a is formed from the first metal sheet 20a to the second current collecting layer 12b.

### [Addendum 11]

The electrode sheet 1 according to Addendum 10, in which the current collector 3 has a recessed shape in a direction from the second current collecting layer 12b toward the first current collecting layer 12a in a cross section including the first bonding mark 24a.

### [Addendum 12]

The electrode sheet 1 according to Addendum 10, in which the current collector 3 has a region in which the first current collecting layer 12a and the second current collecting layer 12b are integrated in a cross section including the first bonding mark 24a.

### [Addendum 13]

The electrode sheet 1 according to any one of Addenda 1 to 12, further comprising: a second active material layer 16b that is provided on a surface of the second current collecting layer 12b on a side opposite to the resin layer 10; and a second metal sheet 20b that is bonded to one end of the second current collecting layer 12b in the lateral direction and has a second bonding mark 24b formed along the longitudinal direction by the bonding, where the second metal sheet 20b has a second extending part 40b that extends from the second current collecting layer 12b in the lateral direction.

### [Addendum 14]

The electrode sheet 1 according to Addendum 13, in which the second bonding mark 24b is a welding mark, and has a recessed shape in a direction from the first current collecting layer 12a toward the second current collecting layer 12b in a cross section including the second bonding mark 24b.

### [Addendum 15]

The electrode sheet 1 according to Addendum 13, in which the first extending part 40a and the second extending part 40b are bonded to each other.

### [Addendum 16]

The electrode sheet 1 according to any one of Addenda 1 to 15, in which the first metal sheet 20a is bonded to the one end such that an interval of 0.1 mm to 10 mm is provided between the first metal sheet 20a and the first active material layer 16a.

### [Addendum 17]

The electrode sheet 1 according to any one of Addenda 1 to 16, in which the first active material layer 16a is a positive-electrode active material, and the first metal sheet 20a is a metal including aluminum.

### [Addendum 18]

The electrode sheet 1 according to any one of Addenda 1 to 17, in which the first active material layer 16a is a negative-electrode active material, and the first metal sheet 20a is a metal including copper.

### [Addendum 19]

A secondary battery 2 constituted by winding a laminated sheet obtained by sandwiching a separator 30 between a positive electrode sheet 4 and a negative electrode sheet 5, each of which has a longitudinal direction and a lateral direction with the lateral direction as an axial direction, in which the positive electrode sheet 4 includes a positive electrode-side current collector 3a that includes a positive electrode-side resin layer 11a, and a first positive electrode-side current collecting layer 13a and a second positive electrode-side current collecting layer 13b that are respectively provided on both surfaces of the positive electrode-side resin layer 11a, a positive electrode active material layer 18a that is provided on a surface of the first positive electrode-side current collecting layer 13a on a side opposite to the positive electrode-side resin layer 11a, and a positive electrode-side metal sheet 21a that is bonded to one end of the first positive electrode-side current collecting layer 13a in the lateral direction and has a positive electrode-side bonding mark 25a formed along the longitudinal direction by the bonding, where the positive electrode-side metal sheet 21a has a positive electrode-side extending part 41a that extends from the first positive electrode-side current collecting layer 13a in the lateral direction; the negative electrode sheet 5 includes a negative electrode-side current collector 3c that includes a negative electrode-side resin layer 11c, and a first negative electrode-side current collecting layer 13c and a second negative electrode-side current collecting layer 13d that are respectively provided on both surfaces of the negative electrode-side resin layer 11c, a negative electrode active material layer 18c that is provided on a surface of the first negative electrode-side current collecting layer 13c on a side opposite to the negative electrode-side resin layer 11c, and a negative electrode-side metal sheet 21c that is bonded to one end of the first negative electrode-side current collecting layer 13c in the lateral direction and has a negative electrode-side bonding mark 25c formed along the longitudinal direction by the bonding, where the negative electrode-side metal sheet 21c has a negative electrode-side extending part 41c that extends from the first negative electrode-side current collecting layer 13c in the lateral direction; and the separator 30 is provided between the positive electrode active material layer 18a and the negative electrode active material layer 18c.

### [Addendum 20]

The secondary battery 2 according to Addendum 19, further comprising: an electrode tab for a positive electrode, which is disposed at one end in the axial direction and is electrically connected to the positive electrode-side extending part 41a; and an electrode tab for a negative electrode, which is disposed at the other end in the axial direction and is electrically connected to the negative electrode-side extending part 41c.

Each of the above embodiments is described for the purpose of description, and it is not intended to limit the scope of the present disclosure. Each of the above embodiments may be modified in various ways without departing from the scope and purpose of the present disclosure. For example, some constitutional elements in one embodiment can be added to other embodiments. In addition, some constitutional elements in one embodiment can be replaced with corresponding constitutional elements in another embodiment.

### Reference Signs List

1: electrode sheet
2: secondary battery
3: current collector
3a: positive electrode-side current collector
3c: negative electrode-side current collector
4: positive electrode sheet
5: negative electrode sheet
10: resin layer
11a: positive electrode-side resin layer
11c: negative electrode-side resin layer
13a: first positive electrode-side current collecting layer
13b: second positive electrode-side current collecting layer
13c: first negative electrode-side current collecting layer
13d: second negative electrode-side current collecting layer
16a: first active material layer
16b: second active material layer
18a: positive electrode active material layer
18c: negative electrode active material layer
20a: first metal sheet
20b: second metal sheet
21a: positive electrode-side metal sheet
21c: negative electrode-side metal sheet
24a: first bonding mark
24b: second bonding mark
25c: negative electrode-side bonding mark
30: separator
40a: first extending part
40b: second extending part
41a: positive electrode-side extending part
41c: negative electrode-side extending part
300: slit
302: recessed part

## Claims

1. An electrode sheet that has a longitudinal direction and a lateral direction and constitutes an electrode of a secondary battery by being wound with the lateral direction as an axial direction, the electrode sheet comprising:
a current collector that includes a resin layer, and a first current collecting layer and a second current collecting layer that are respectively provided on both surfaces of the resin layer;
a first active material layer that is provided on a surface of the first current collecting layer on a side opposite to the resin layer; and
a first metal sheet that is bonded to one end of the first current collecting layer in the lateral direction and has a first bonding mark formed along the longitudinal direction by the bonding, where the first metal sheet has a first extending part that extends from the first current collecting layer in the lateral direction.

2. The electrode sheet according to Claim 1, wherein the first extending part includes one or more slits.

3. The electrode sheet according to Claim 2, wherein the one or more slits are provided along the lateral direction.

4. The electrode sheet according to Claim 1, wherein the first extending part includes a plurality of recessed parts that are recessed in the lateral direction, along the longitudinal direction.

5. The electrode sheet according to Claim 4, wherein the plurality of recessed parts are provided to be spaced apart from each other at regular intervals.

6. The electrode sheet according to Claim 4, wherein the recessed part has a rectangular shape.

7. The electrode sheet according to Claim 1, wherein the first bonding mark is a welding mark.

8. The electrode sheet according to Claim 7, wherein the first bonding mark is formed from the first metal sheet to the first current collecting layer.

9. The electrode sheet according to Claim 8, wherein the first bonding mark is formed to have a linear shape or a shape of a plurality of dots along the longitudinal direction.

10. The electrode sheet according to Claim 7, wherein the first bonding mark is formed from the first metal sheet to the second current collecting layer.

11. The electrode sheet according to Claim 10, wherein the current collector has a recessed shape in a direction from the second current collecting layer toward the first current collecting layer in a cross section including the first bonding mark.

12. The electrode sheet according to Claim 10, wherein the current collector has a region in which the first current collecting layer and the second current collecting layer are integrated in a cross section including the first bonding mark.

13. The electrode sheet according to Claim 1, further comprising:
a second active material layer that is provided on a surface of the second current collecting layer on a side opposite to the resin layer; and
a second metal sheet that is bonded to one end of the second current collecting layer in the lateral direction and has a second bonding mark formed along the longitudinal direction by the bonding, where the second metal sheet has a second extending part that extends from the second current collecting layer in the lateral direction.

14. The electrode sheet according to Claim 13, wherein the second bonding mark is a welding mark, and has a recessed shape in a direction from the first current collecting layer toward the second current collecting layer in a cross section including the second bonding mark.

15. The electrode sheet according to Claim 13, wherein the first extending part and the second extending part are bonded to each other.

16. The electrode sheet according to any one of Claims 1 to 15, wherein the first metal sheet is bonded to the one end such that an interval of 0.1 mm to 10 mm is provided between the first metal sheet and the first active material layer.

17. The electrode sheet according to any one of Claims 1 to 15,
wherein the first active material layer is a positive-electrode active material, and
the first metal sheet is a metal including aluminum.

18. The electrode sheet according to any one of Claims 1 to 15,
wherein the first active material layer is a negative-electrode active material, and
the first metal sheet is a metal including copper.

19. A secondary battery constituted by winding a laminated sheet obtained by sandwiching a separator between a positive electrode sheet and a negative electrode sheet, each of which has a longitudinal direction and a lateral direction with the lateral direction as an axial direction,
wherein the positive electrode sheet includes a positive electrode-side current collector that includes a positive electrode-side resin layer, and a first positive electrode-side current collecting layer and a second positive electrode-side current collecting layer that are respectively provided on both surfaces of the positive electrode-side resin layer,
a positive electrode active material layer that is provided on a surface of the first positive electrode-side current collecting layer on a side opposite to the positive electrode-side resin layer, and
a positive electrode-side metal sheet that is bonded to one end of the first positive electrode-side current collecting layer in the lateral direction and has a first bonding mark formed along the longitudinal direction by the bonding, where the positive electrode-side metal sheet has a positive electrode-side extending part that extends from the first positive electrode-side current collecting layer in the lateral direction;
the negative electrode sheet includes a negative electrode-side current collector that includes a negative electrode-side resin layer, and a first negative electrode-side current collecting layer and a second negative electrode-side current collecting layer that are respectively provided on both surfaces of the negative electrode-side resin layer,
a negative electrode active material layer that is provided on a surface of the first negative electrode-side current collecting layer on a side opposite to the negative electrode-side resin layer, and
a negative electrode-side metal sheet that is bonded to one end of the first negative electrode-side current collecting layer in the lateral direction and has a negative electrode-side bonding mark formed along the longitudinal direction by the bonding, where the negative electrode-side metal sheet has a negative electrode-side extending part that extends from the first negative electrode-side current collecting layer in the lateral direction; and
the separator is provided between the positive electrode active material layer and the negative electrode active material layer.

20. The secondary battery according to Claim 19, further comprising:
an electrode tab for a positive electrode, which is disposed at one end in the axial direction and is electrically connected to the positive electrode-side extending part; and
an electrode tab for a negative electrode, which is disposed at the other end in the axial direction and is electrically connected to the negative electrode-side extending part.
